# EUROPEAN PATENT APPLICATION

(11) **EP 4 462 658 A1**
(43) Date of publication of application: **13.11.2024**
(21) Application number: 24152515.3
(22) Date of filing: 18.01.2024
(51) Int. Cl.: H02K 15/04

(54) **DEVICE FOR FORMING COPPER WIRES OF A FLAT WIRE MOTOR STATOR**

(30) Priority: 12.05.2023 CN 202310538849
(71) Applicant: UPTEC Intelligent Manufacturing (Wuxi) Co., Ltd., Wuxi City, Jiangsu Province 214000 (CN)
(72) Inventor: YE, Xin, Wuxi City, Jiangsu Province 214000 (CN); ZHOU, Liangliang, Wuxi City, Jiangsu Province 214000 (CN); XU, Lei, Wuxi City, Jiangsu Province 214000 (CN); TANG, Shang, Wuxi City, Jiangsu Province 214000 (CN); XU, Jianhai, Wuxi City, Jiangsu Province 214000 (CN)
(74) Representative: Longoni, Alessandra

(57) **Abstract**

The present invention relates to a device for forming copper wires of a flat wire motor stator, including: a loading mechanism, configured to automatically discharge copper wire rolls and straighten copper wires; an enamel removal mechanism, configured to automatically remove enamel on four side surfaces of the straightened copper wire; a chamfering mechanism, configured to cut away four edges of the enamel-removed copper wire at a same position; a wire feeding mechanism, configured to automatically feed the wires during processing of the loading mechanism, the enamel removal mechanism and the chamfering mechanism; a cut-off mechanism, configured to cut off the processed copper wire at a fixed length; a 2D forming mechanism, configured to carry out 2D forming on the copper wire that has been cut off at the fixed length; a transit mechanism, configured to transfer the 2D-formed copper wire onto a 3D forming mechanism; the 3D forming mechanism, configured to carry out 3D punch forming on the 2D-formed copper wire; and an unloading part, configured to collect the 3D-formed copper wire. The present invention can produce at least two shapes of copper wires.

## Description

### FIELD OF TECHNOLOGY

The present invention belongs to the technical field of devices for forming copper wires of a flat wire motor stator, and particularly relates to a device for forming copper wires of a flat wire motor stator.

### BACKGROUND

Hairpin permanent magnet synchronous motors are being gradually applied on a large scale in the domestic drive motor market. Compared with the traditional wire-wound motors, since the hairpin copper wire is flat, the hairpin motor is smaller in size and higher in power under the same power, and thus it is the trend of the next-generation new energy drive motor.

However, the shapes of the hairpin copper wires are complex and diversified, and at least two shapes are required for the copper wires of the same layer on the stator of the hairpin motor. At present, there is still no automatic copper wire forming device that can produce at least two shapes of copper wires in the market, causing low production efficiency of copper wires. When different shapes of copper wires need to be produced, people have to buy different forming devices for different shapes of copper wires. Therefore, there is a need for an automatic copper wire forming device that can produce at least two shapes of copper wires.

### SUMMARY

In view of the above problems, the present invention provides a device for forming copper wires of a flat wire motor stator, which well solves the problem that one forming device in the prior art cannot produce at least two shapes of copper wires.

In order to achieve the above objective, the present disclosure adopts the following technical solution: A device for forming copper wires of a flat wire motor stator includes:
a loading mechanism, configured to automatically discharge copper wire rolls and straighten copper wires;
an enamel removal mechanism, configured to automatically remove enamel on four side surfaces of the straightened copper wire;
a chamfering mechanism, configured to cut away four edges of the enamel-removed copper wire at a same position;
a wire feeding mechanism, configured to automatically feed the wires during processing of the loading mechanism, the enamel removal mechanism and the chamfering mechanism;
a cut-off mechanism, configured to cut off the processed copper wire at a fixed length; a 2D forming mechanism, configured to carry out 2D forming on the copper wire that has been cut off at the fixed length;
a transit mechanism, configured to transfer the 2D-formed copper wire onto a 3D forming mechanism;
the 3D forming mechanism, configured to carry out 3D punch forming on the 2D-formed copper wire; and
an unloading part, configured to collect the 3D-formed copper wire.

Further, the loading mechanism includes a first support frame; a plurality of driving parts disposed in the first support frame, and a copper wire reel placed on each of the driving parts; the first support frame is provided with a plurality of pressing assemblies corresponding to the copper wire reels, a feeding part, and a guide roller set and a straightening assembly that cooperate with the feeding part.

Further, the enamel removal mechanism includes a first worktable. At least one enamel removal apparatus is disposed on the first worktable. The enamel removal apparatus includes a horizontal cutting apparatus, a vertical cutting apparatus and a wire pressing apparatus. The horizontal cutting apparatus and the vertical cutting apparatus are slidably connected to the first worktable. The horizontal cutting apparatus and the vertical cutting apparatus slide along a same straight line. Operating tracks of the horizontal cutting apparatus and the vertical cutting apparatus are perpendicular to each other. The wire pressing apparatus is located on one side of the horizontal cutting apparatus or the vertical cutting apparatus.

The chamfering mechanism includes a second worktable. Mounting frames are disposed on the second worktable. A second power assembly, a driving assembly and edge cutting assemblies are disposed on the mounting frames. The second power assembly is connected with the driving assembly. The driving assembly is connected with the edge cutting assemblies. The second power assembly provides power for the edge cutting assemblies. The driving assembly is configured to drive the edge cutting assemblies to cut away the four edges of the copper wire at the same position.

Further, the wire feeding mechanism includes a third worktable. A movable clamping module set is disposed on the third worktable. The movable clamping module set includes a first moving module and a second moving module capable of reciprocating along a same straight line. The first moving module and the second moving module are respectively provided with a clamping apparatus. The clamping apparatuses are capable of alternately clamping and pulling the copper wires so as to complete conveying.

The cut-off mechanism includes a device frame, fifth cutters and a reciprocating cutting apparatus disposed on the device frame and configured to drive the fifth cutters to reciprocate up and down. A pressing apparatus moving with the fifth cutter is disposed at a rear of the fifth cutter, and a cutter assembly cooperating with the fifth cutter is disposed below the fifth cutter.

Further, the 2D forming mechanism includes:
two second clamping parts, configured to clamp and fix the plurality of copper wires; two bending parts, configured to bend the plurality of copper wires into different shapes while continuously moving towards the second clamping parts so as to continuously bend the plurality of copper wires; and
a reciprocating adjusting assembly, configured to drive the second clamping parts and the bending parts to make reciprocating sliding for adjustment so as to realize alternate loading of the second clamping parts.

Further, the transit mechanism includes a robotic arm. The robotic arm is connected with an adjusting framework. A transverse moving module is disposed in the adjusting framework. A plurality of longitudinal moving modules is disposed on the transverse moving module. A lower end of each of the longitudinal moving modules is provided with a first clamping part. The adjusting framework is provided with second sliding slots. Each of the longitudinal moving modules is provided with a second follower, and the second follower is slidably connected in the second sliding slot.

Further, the 3D forming mechanism includes:
forming molds, configured to form the copper wires;
a transfer assembly, configured to transfer the copper wires into the forming molds and synchronously transfer the formed copper wires out of the forming molds; and
a linkage assembly, configured to synchronously drive the forming molds and the transfer assembly to reciprocate.

Further, the unloading part includes a U-shape unloading mechanism and an I-shape unloading mechanism. The U-shape unloading mechanism and the I-shape unloading mechanism are located on one side of the 3D forming mechanism so as to realize unloading of a U-shaped copper wire and an I-shaped copper wire.

Further, the U-shape unloading mechanism includes a pulling assembly located on one side of the 3D forming mechanism, a receiving rack located below the pulling assembly, a guiding tube connected to an end of the receiving rack away from the 3D forming mechanism, and a collecting assembly located below an end of the guiding tube away from the receiving rack.

The pulling assembly includes a second conveyor belt and one or more pulling blocks located on the second conveyor belt. The pulling block moves as the second conveyor belt operates so as to pull the copper wire onto the receiving rack.

The receiving rack and the guiding tube are both inclined such that the copper wire slides from the receiving rack and the guiding tube onto the collecting assembly. The collecting assembly includes a gathering rod adjustable vertically and horizontally. The gathering rod is located below the end of the guiding tube away from the receiving rack. The gathering rod is inclined downwards from an end close to the guiding tube. Lower ends of the gathering rod and the guiding tube are respectively provided with a blocking assembly II and a blocking assembly I. The blocking assembly II and the blocking assembly I have a same structure.

Further, the I-shape unloading mechanism includes a shifting assembly located on one side of the 3D forming mechanism and a gathering assembly disposed on a side of the shifting assembly facing away from the 3D forming mechanism. The shifting assembly includes a second motor, two fourth vertical plates disposed on two sides of the second motor, second swing rods rotatably connected to the fourth vertical plates, follower plates disposed on the swing rods, a first lifting rod and a second lifting rod disposed on the two follower plates, and a placement block adjustable up and down.

The two second swing rods are disposed symmetrically, and the second motor is capable of driving the two second swing rods to rotate.

Opposite side surfaces of the fourth vertical plates are provided with connecting sliders that slide left and right, and the two connecting sliders are vertically and slidably connected to the first lifting rod and the second lifting rod.

The gathering assembly includes a rotary table, a third motor configured to drive the rotary table to rotate, and two sets of clamping rods located on the rotary table. Each set of clamping rods includes a left pair and a right pair, and a gap for placing the I-shaped copper wire is left between each pair of clamping rods. A receiving block is disposed between the two pairs of clamping rods. The receiving block is vertically slidable along the clamping rods. The receiving block abuts against a sixth cylinder. When the rotary table rotates, an upper end of the sixth cylinder is located below the rotary table.

When the I-shaped copper wire on the first lifting rod and the second lifting rod comes between the two clamping rods, the first lifting rod and the second lifting rod do not contact the I-shaped copper wire that has been placed between the two clamping rods when moving downwards.

Compared with the prior art, the present invention has the following beneficial effects:
1. In the present invention, through the plurality of driving parts and the plurality of copper wire reels, multi-station production can be performed, which reduces the production cost and the occupied space. Moreover, the cooperation of the driving parts and the pressing assemblies facilitates feeding and threading, which improves the operating efficiency.
2. In the present invention, the movable horizontal cutting apparatus and vertical cutting apparatus are used to die-cut the copper wire so as to remove the enamel horizontally and vertically by two steps, which is very effective. Through the cooperation of the second power assembly, the driving assembly and the edge cutting assemblies, the edges on two sides of the copper wire can be cut away quickly and effectively, which can ensure the copper wire to be inserted into a stator slot more easily and prevent the burr left after the enamel removal or the original edges from scratching armature paper, thereby improving the production quality of the stator and reducing the workload and production cost.
3. In the present invention, the second clamping parts are used to clamp the plurality of copper wires, and the bending parts are used to continuously bend different shapes of copper wires, so that the present invention is suitable for producing multiple shapes of copper wires at the same time.
4. In the present invention, the transfer assembly is used to transfer the plurality of copper wires into the corresponding forming molds, and the linkage assembly is used to synchronously drive the forming molds and the transfer assembly, so that multiple shapes of copper wires can be conveyed and formed continuously.
5. In the present invention, the I-shape unloading mechanism and the U-shape unloading mechanism are used to automatically unload the I-shaped copper wire and the U-shaped copper wire, which facilitates the unloading of the I-shaped copper wire and the U-shaped copper wire.

### BRIEF DESCRIPTION OF THE DRAWINGS

FIG. 1 is a schematic structural view of the present invention;
FIG. 2 is a schematic structural view of a loading mechanism in the present invention;
FIG. 3 is a schematic three-dimensional enlarged view of a straightening assembly in

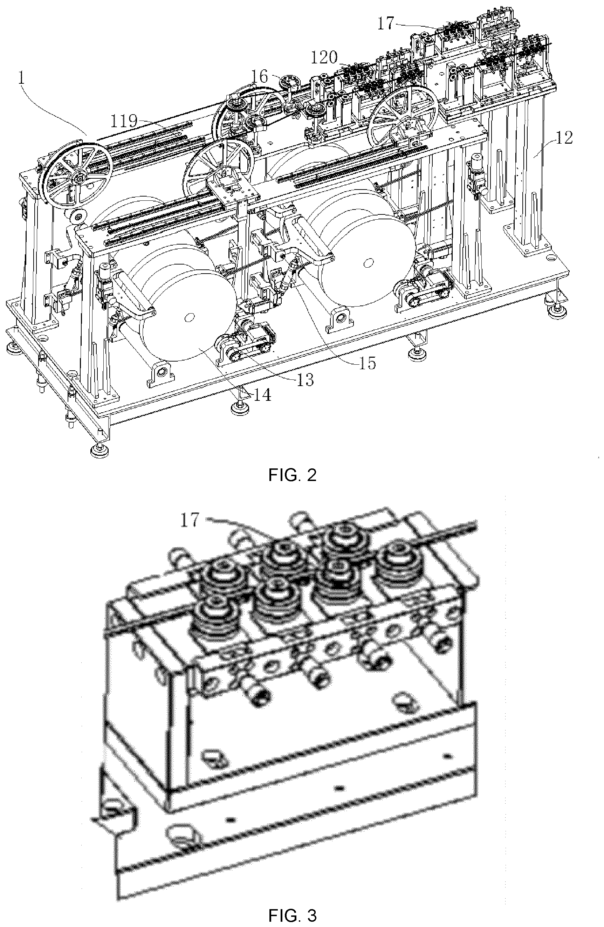

FIG. 2 in the present invention;

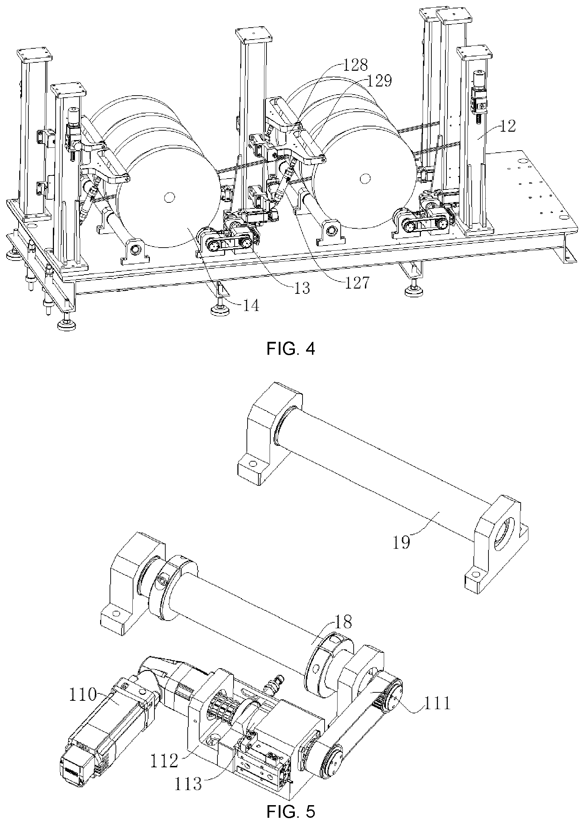

FIG. 4 is a schematic three-dimensional structural view of a part of FIG. 2 in the present invention;
FIG. 5 is a schematic three-dimensional structural view of a driving part in FIG. 2 in the present invention;

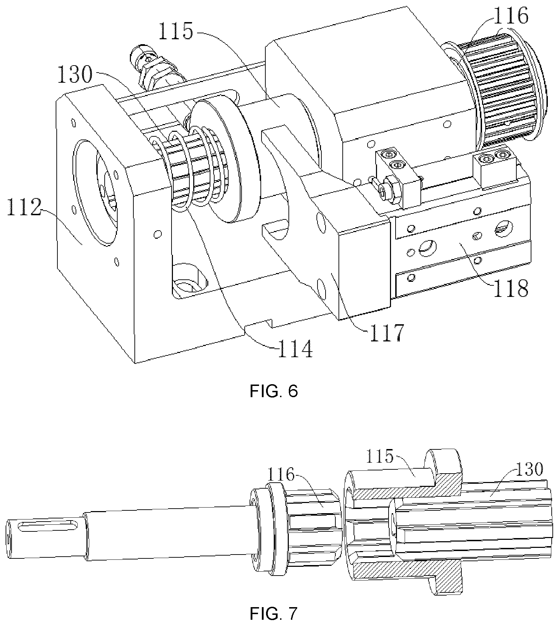

FIG. 6 is a schematic three-dimensional structural view of a start-stop assembly in
FIG. 2 in the present invention;
FIG. 7 is a schematic three-dimensional structural view of a part of FIG. 2 when the start-stop assembly is in a disconnected state in the present invention;

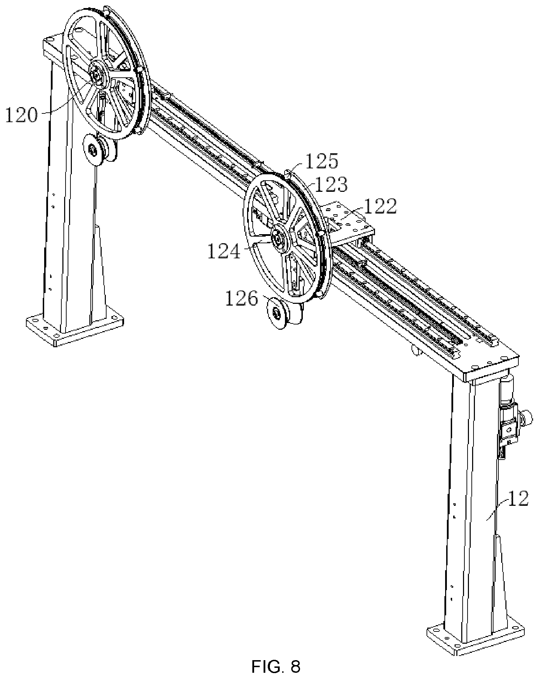

FIG. 8 is a schematic three-dimensional structural view of a feeding part in FIG. 2 in the present invention;

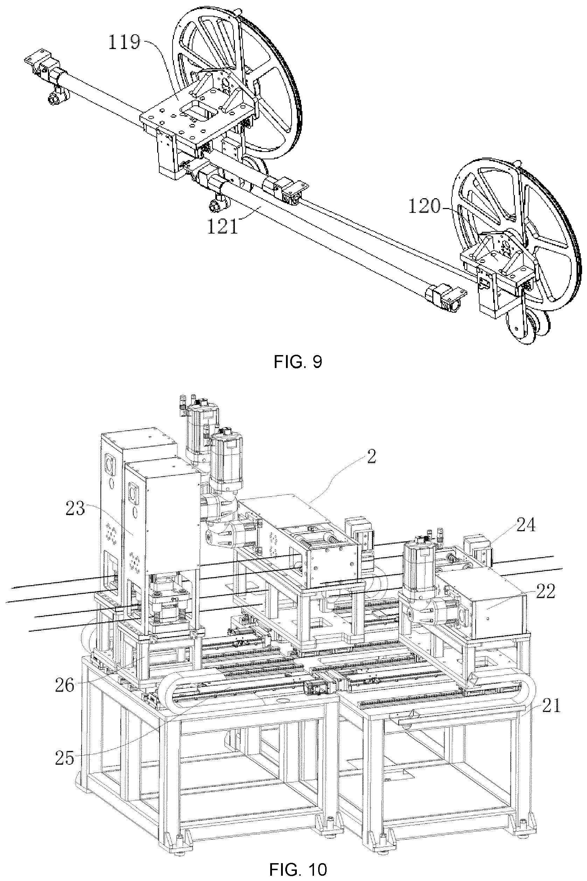

FIG. 9 is a schematic view showing positions of tensioning cylinders in FIG. 2 in the present invention;
FIG. 10 is a schematic structural view of an enamel removal mechanism of the present invention;

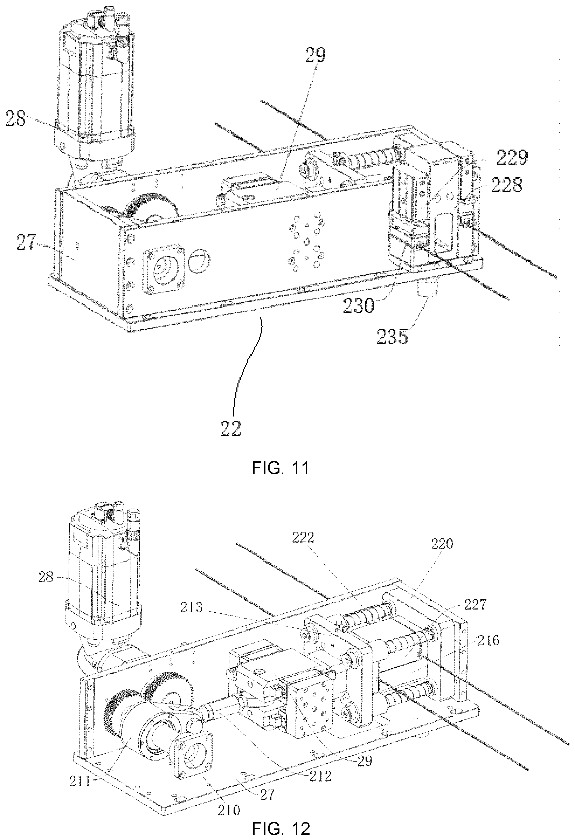

FIG. 11 is a schematic structural view of a horizontal cutting apparatus and a wire pressing apparatus in FIG. 10 in the present invention;
FIG. 12 is a schematic view showing an internal structure of the horizontal cutting apparatus in FIG. 10 in the present invention;

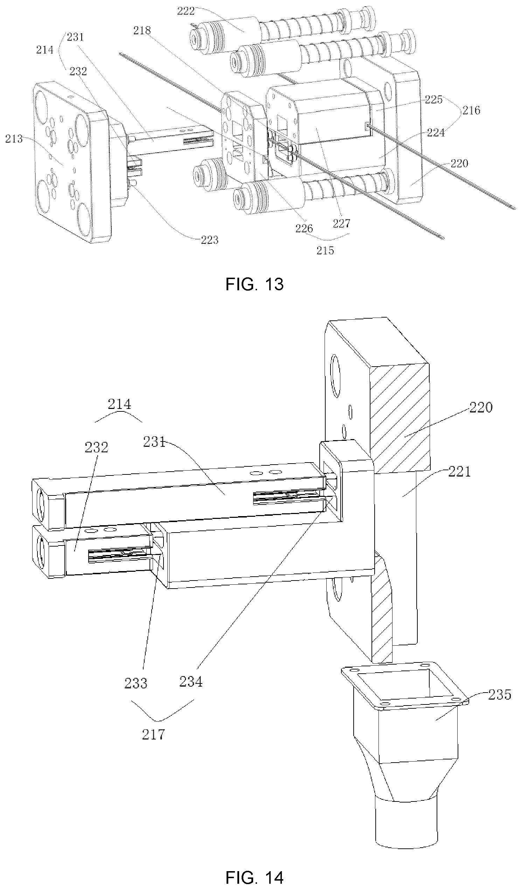

FIG. 13 is a schematic structural view of a wire cutting mechanism of the horizontal cutting apparatus in FIG. 10 in the present invention;
FIG. 14 is a schematic structural view of cutters, discharge holes and a discharge channel in FIG. 10 in the present invention;

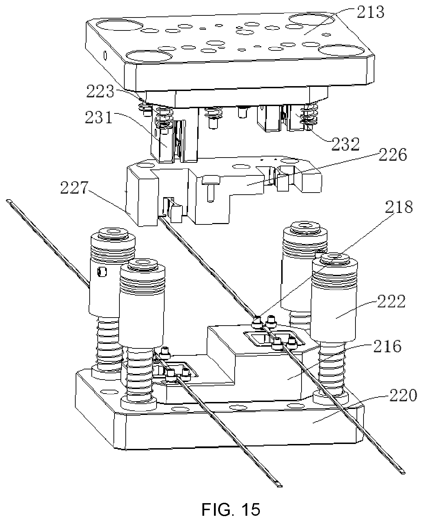

FIG. 15 is a schematic structural view of a vertical cutting apparatus in FIG. 10 in the present invention;

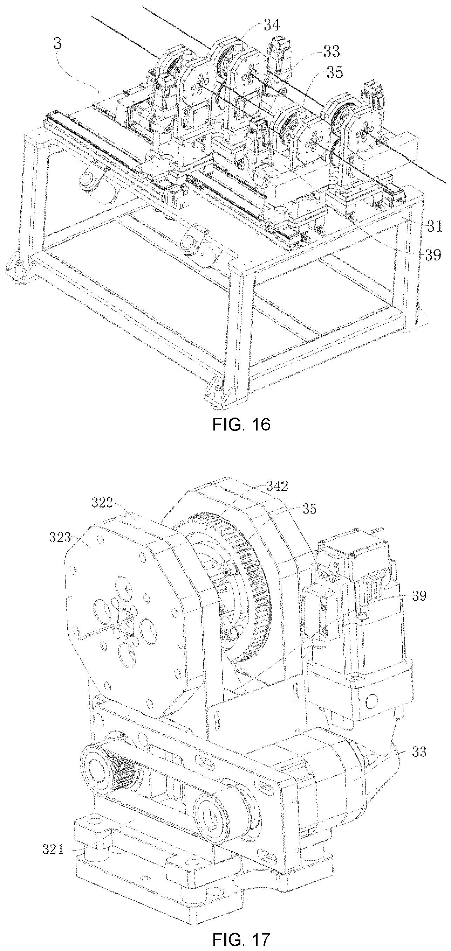

FIG. 16 is a three-dimensional view of a chamfering mechanism in the present invention;
FIG. 17 is a partial three-dimensional view of FIG. 16 in the present invention;

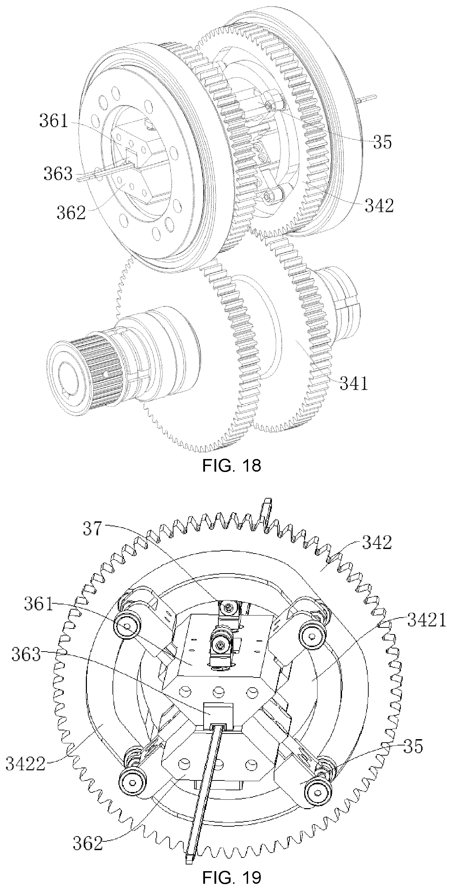

FIG. 18 is a three-dimensional view of a driving assembly in FIG. 16 in the present invention;
FIG. 19 is a three-dimensional view of an edge cutting assembly and a fixing assembly in FIG. 16 of the present invention;

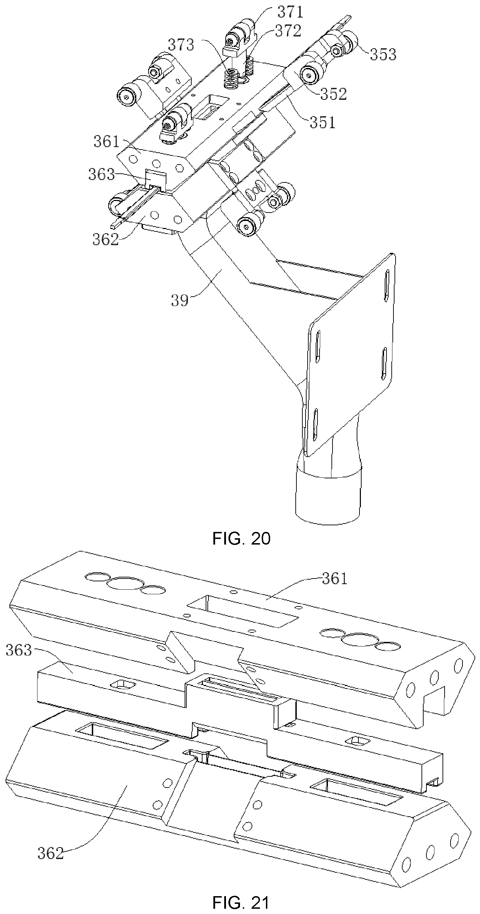

FIG. 20 is a three-dimensional view of the fixing assembly and a discharge hopper in
FIG. 16 of the present invention;
FIG. 21 is a three-dimensional view of the fixing assembly in FIG. 16 in the present invention;

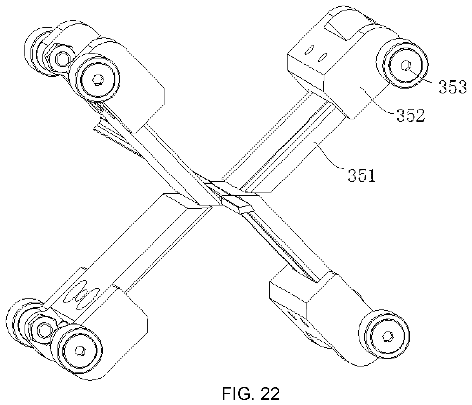

FIG. 22 is a three-dimensional view of the edge cutting assembly in FIG. 16 in the present invention;

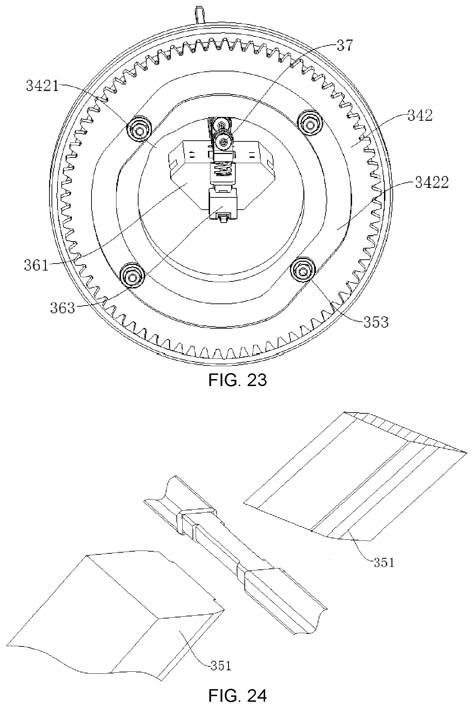

FIG. 23 is a three-dimensional view of a driven gear in FIG. 16 in the present invention;
FIG. 24 is a three-dimensional view of the cutter in FIG. 16 in the present invention;

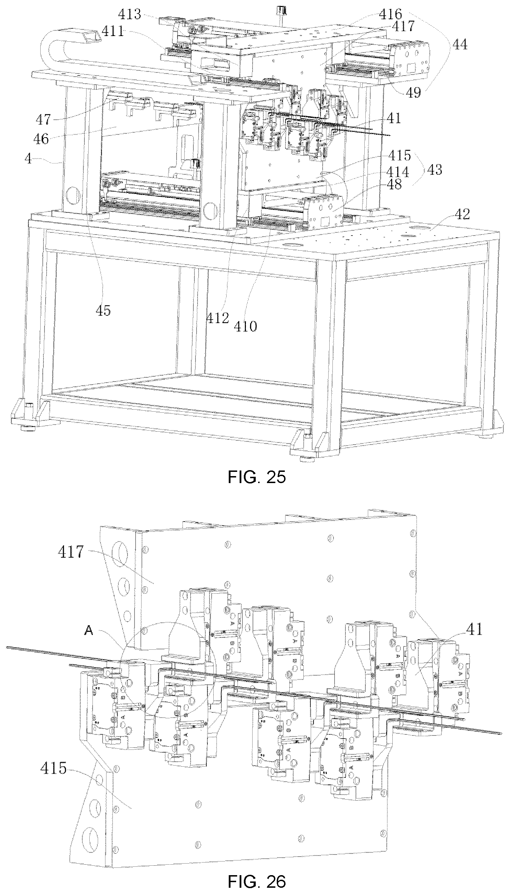

FIG. 25 is a schematic three-dimensional structural view of a wire feeding mechanism in the present invention;
FIG. 26 is a schematic structural view of a first assembling plate and a clamping apparatus in FIG. 25 of the present invention;

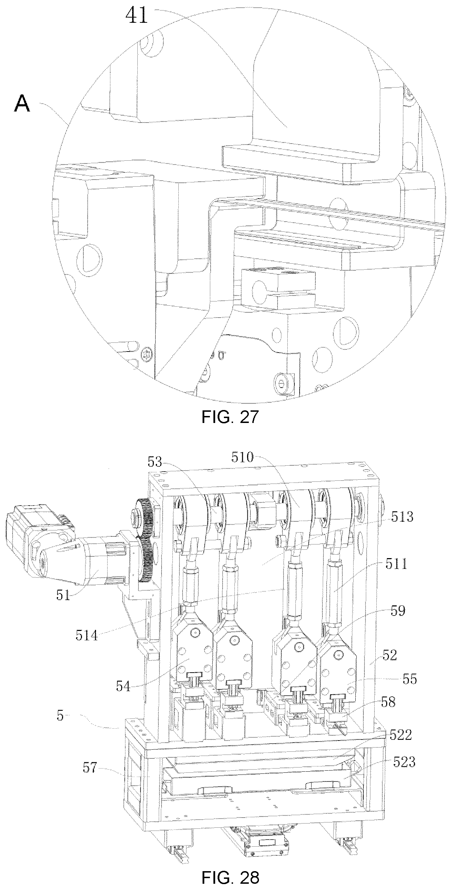

FIG. 27 is a schematic enlarged structural view of area A in FIG. 26 in the present invention;
FIG. 28 is a schematic structural view of a cut-off mechanism in the present invention;

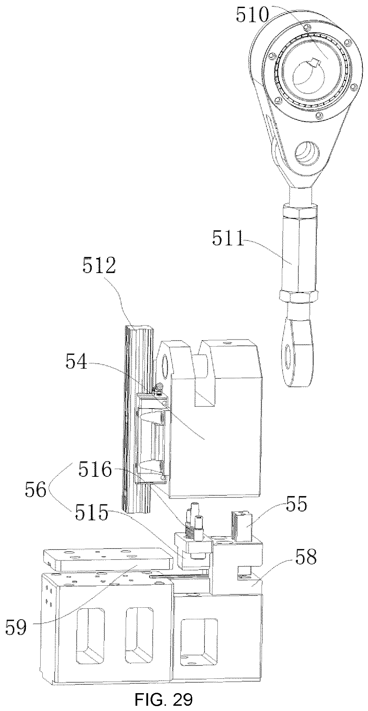

FIG. 29 is a schematic partial enlarged structural view of an adjusting framework in
FIG. 28 in the present invention;

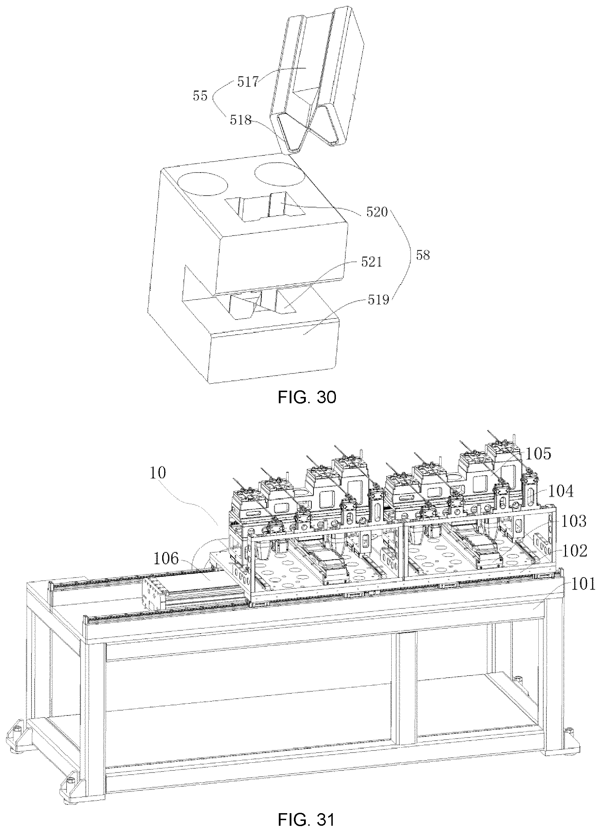

FIG. 30 is a schematic partial enlarged structural view of an internal structure of an adjusting framework in FIG. 28 in the present invention;
FIG. 31 is a schematic structural view of a 2D forming mechanism in the present invention;

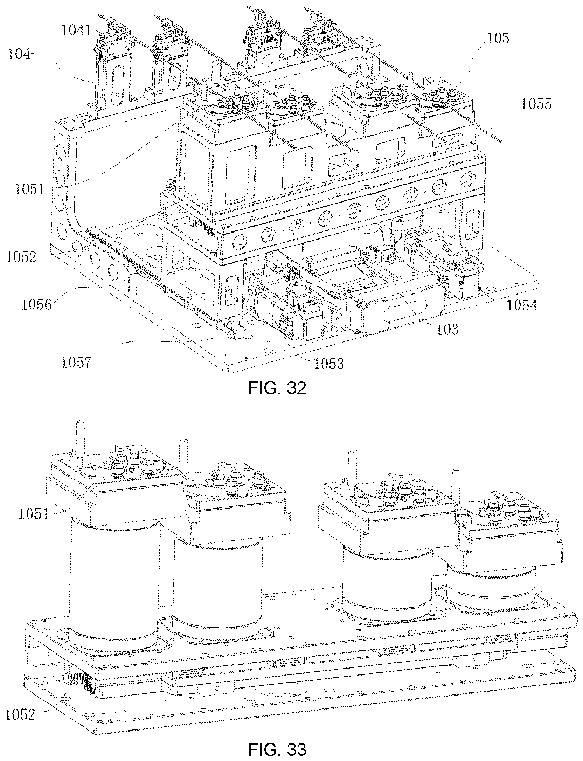

FIG. 32 is a schematic structural view of second clamping parts and bending parts in
FIG. 31 in the present invention;
FIG. 33 is a schematic structural view of the bending part in FIG. 32 in the present invention;

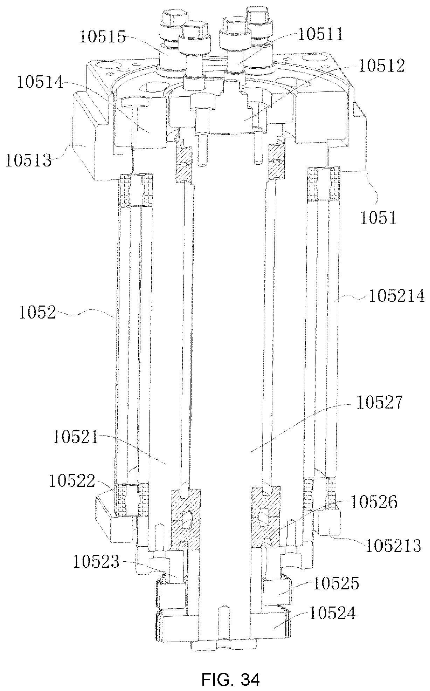

FIG. 34 is a schematic structural cutaway view of a power assembly and a bending assembly in FIG. 31 in the present invention;

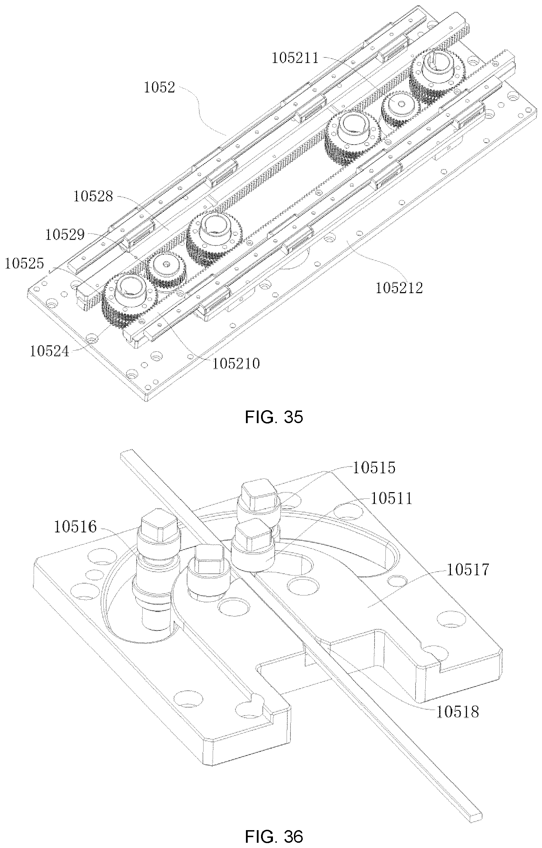

FIG. 35 is a schematic structural view of a transmission mechanism in FIG. 31 in the present invention;
FIG. 36 is a schematic structural view of a wire routing plate in FIG. 31 in the present invention;

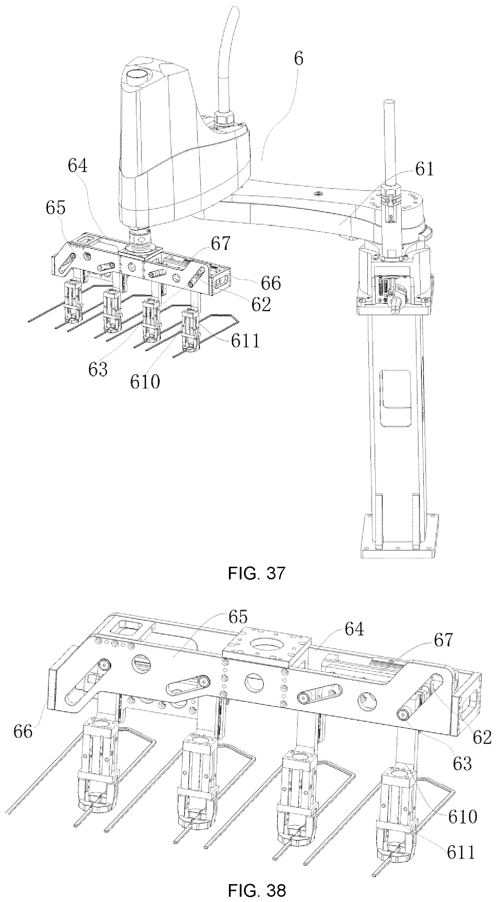

FIG. 37 is a schematic structural view of a transit mechanism in the present invention;
FIG. 38 is a schematic partial enlarged structural view of the adjusting framework in
FIG. 37 in the present invention;

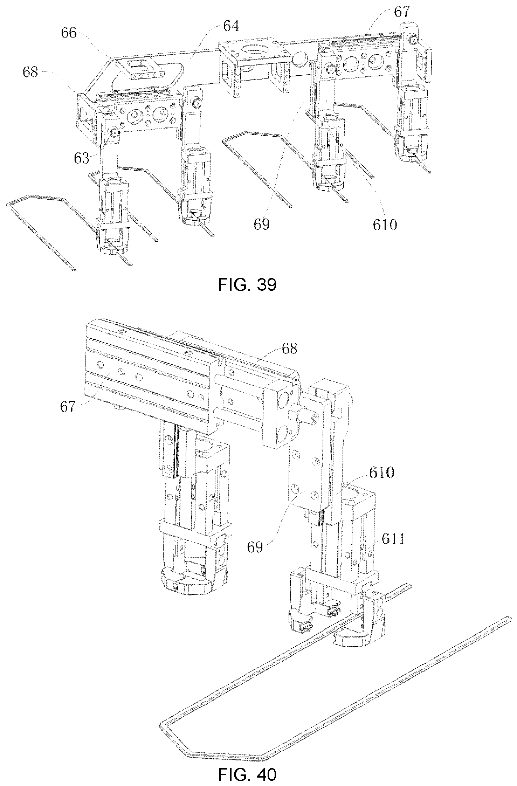

FIG. 39 is a schematic partial enlarged structural view of an internal structure of the adjusting framework in FIG. 37 in the present invention;
FIG. 40 is a schematic partial enlarged structural view of an adjusting cylinder in FIG. 37 in the present invention;

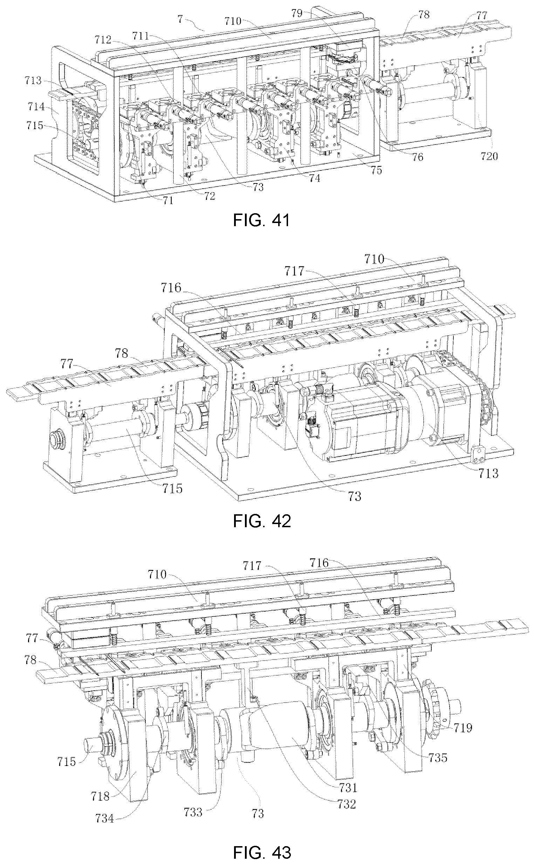

FIG. 41 is a schematic structural view of a 3D forming mechanism in the present invention;
FIG. 42 is a schematic structural rear view of FIG. 41 in the present invention;
FIG. 43 is a schematic structural view of a linkage assembly and a pressure plate in
FIG. 41 in the present invention;

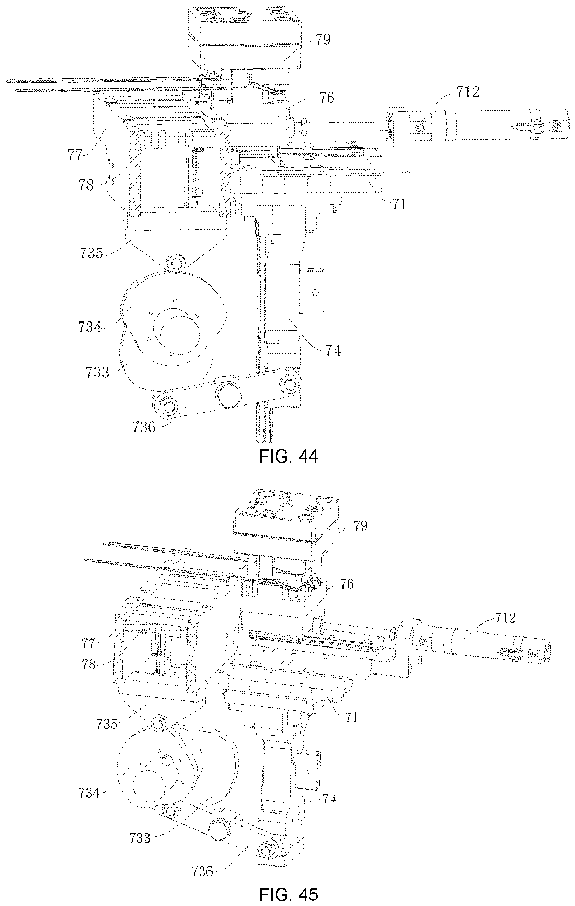

FIG. 44 is a schematic structural view showing transmission between a first cam and a second cam in FIG. 43 in the present invention;
FIG. 45 is a schematic structural side view of FIG. 44 in the present invention;

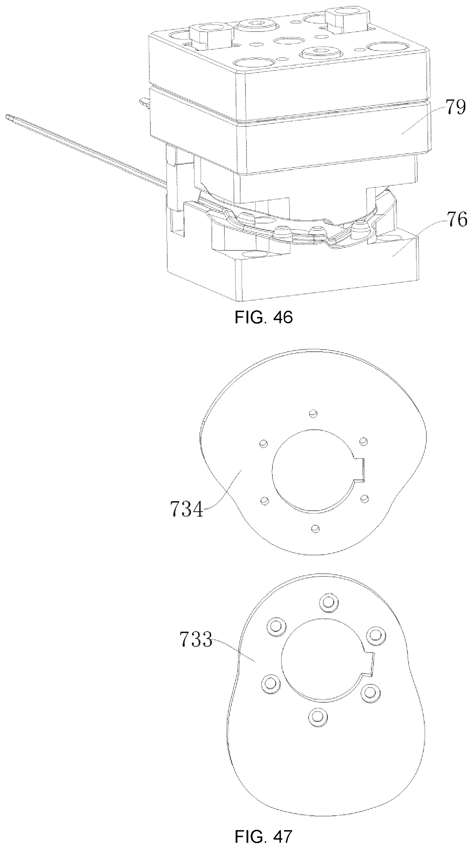

FIG. 46 is a schematic structural view of an upper mold and a lower mold for a U-shaped wire in FIG. 41 in the present invention;
FIG. 47 is a schematic structural view of the first cam and the second cam in FIG. 43 in the present invention;

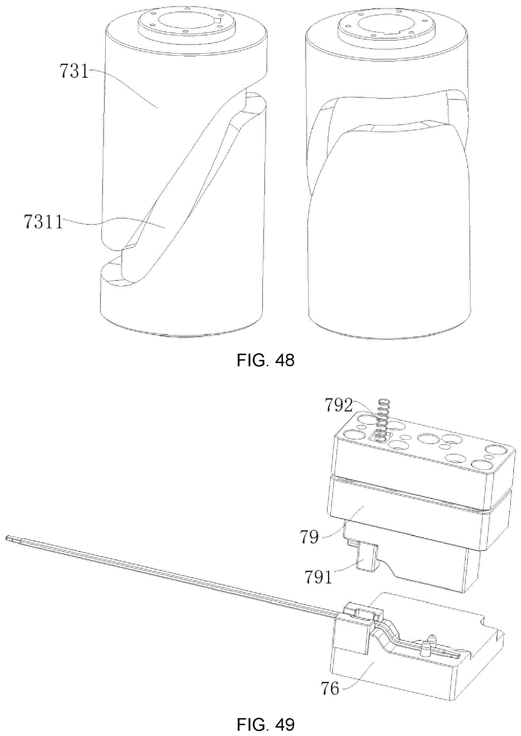

FIG. 48 is a schematic structural view of a cylindrical cam in FIG. 43 in the present invention;
FIG. 49 is a schematic structural view of an upper mold and a lower mold for an I-shaped wire in FIG. 41 in the present invention;

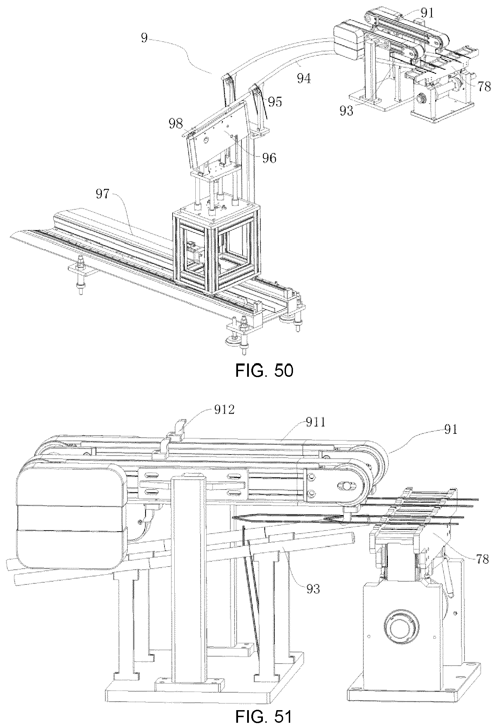

FIG. 50 is a schematic structural view of a U-shape unloading mechanism in the present invention;
FIG. 51 is a schematic structural view of a pulling assembly and a receiving rack in
FIG. 50 in the present invention;

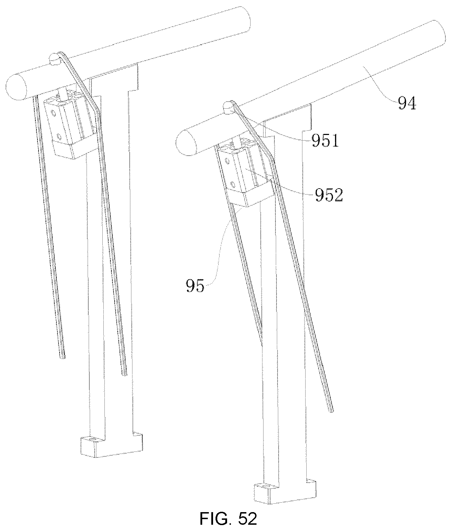

FIG. 52 is a schematic structural view showing the position of a blocking assembly in
FIG. 50 in the present invention;

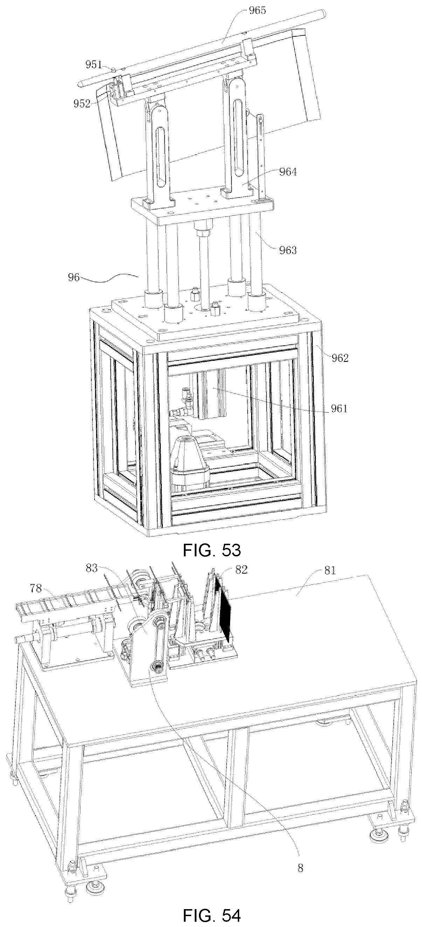

FIG. 53 is a schematic structural view of a collecting assembly in FIG. 51 in the present invention;
FIG. 54 is a schematic structural view of an I-shape unloading mechanism in the present invention;

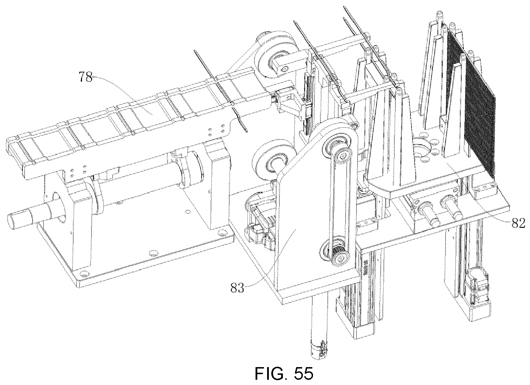

FIG. 55 is a schematic structural view showing positions of a gathering assembly, a shifting assembly and a transfer plate in FIG. 54 in the present invention;

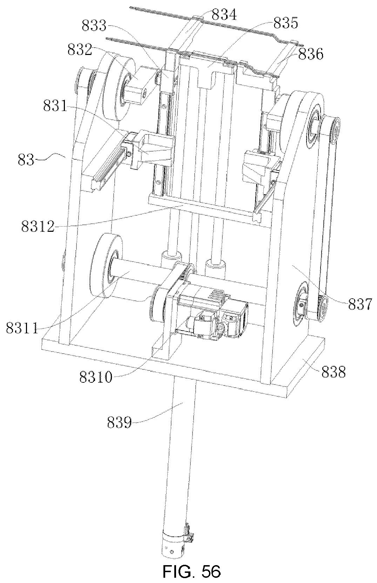

FIG. 56 is a schematic structural view of the shifting assembly in FIG. 54 in the present invention; and

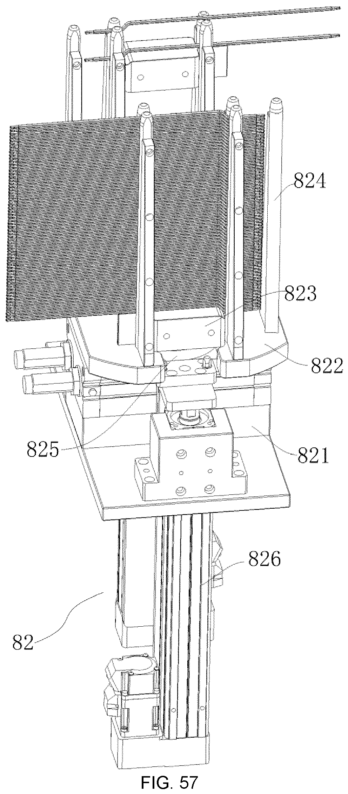

FIG. 57 is a schematic structural view of the gathering assembly in FIG. 54 in the present invention.

In the drawings: 1, loading mechanism; 12, first support frame; 13, driving part; 14, copper wire reel; 15, pressing assembly; 16, guide roller set; 17, straightening assembly; 18, driving roller; 19, driven roller; 110, drive motor; 111, first conveyor belt; 112, fixed seat; 113, start-stop assembly; 114, first spring; 115, connecting sleeve; 116, linkage shaft; 117, limit block; 118, second cylinder; 119, front feeding assembly; 120, rear feeding assembly; 121, tensioning cylinder; 122, first slider; 123, stop block; 124, first rotary table; 125, follower post; 126, guide wheel; 127, first cylinder; 128, first connecting member; 129, pressure roller; 130, driving shaft; 2, enamel removal mechanism; 21, first worktable; 22, horizontal cutting apparatus; 23, vertical cutting apparatus; 24, wire pressing apparatus; 25, straight line module set; 26, first sliding seat; 27, housing; 28, first power assembly; 29, second slider; 210, transmission shaft; 211, first cam bearing; 212, first connecting rod; 213, push block; 214, fourth cutter; 215, floating assembly; 216, guide block; 217, discharge hole; 218, wire guiding wheel; 219, wire conveying hole; 220, first vertical plate; 221, discharge channel; 222, first elastic assembly; 223, second elastic assembly; 224, guide block I; 225, guide block II; 226, first floating block; 227, second floating block; 228, mounting block; 229, third cylinder; 230, first wire passing block; 231, first cutter; 232, second cutter; 233, first discharge hole; 234, second discharge hole; 235, discharge duct; 3, chamfering mechanism; 31, second worktable; 321, first base; 322, second vertical plate; 323, fixed plate; 33, second power assembly; 34, driving assembly; 341, driving gear; 342, driven gear; 3421, inner ring; 3422, sliding slot III; 35, edge cutting assembly; 351, third cutter; 352, first connecting block; 353, first follower; 361, second wire passing block; 362, supporting block; 363, third floating block; 37, third elastic assembly; 371, pressure head; 372, pressure post; 373, second spring; 39, discharge hopper; 4, wire feeding mechanism; 41, clamping apparatus; 42, third worktable; 43, first moving module; 44, second moving module; 45, first supporting frame; 46, first assembling plate; 47, third wire passing block; 48, straight line module set I; 49, straight line module set II; 410, guide rail I; 411, guide rail II; 412, sliding slot I; 413, sliding slot II; 414, horizontal plate I; 415, vertical plate I; 416, horizontal plate II; 417, vertical plate II; 5, cut-off mechanism; 51, power source; 52, second supporting frame; 53, first rotating shaft; 54, assembling block; 55, fifth cutter; 56, pressing apparatus; 57, second base; 58, cutter assembly; 59, wire routing block; 510, second cam bearing; 511, second connecting rod; 512, third slider; 513, sliding slot plate; 514, first sliding slot; 515, first pressing block; 516, disc spring; 517, shank; 518, cutting edge; 519, cutter holder; 520, upper cutter groove; 521, lower cutter groove; 522, collecting port; 523, scrap box; 6, transit mechanism; 61, robotic arm; 62, second sliding slot; 63, second follower; 64, first mounting plate; 65, adjusting plate; 66, first support plate; 67, adjusting cylinder; 68, second assembling plate; 69, fourth slide rail; 610, slide core; 611, first clamping part; 7, 3D forming mechanism; 71, movable plate; 72, slide post; 73, linkage assembly; 731, cylindrical cam; 7311, sliding slot IV; 732, pull block; 733, first cam; 734, second cam; 735, connecting plate; 736, first swing rod; 74, lifting block; 75, third base; 76, lower mold; 77, side plate; 78, transfer plate; 79, upper mold; 791, second pressing block; 792, spring; 710, fixed frame; 711, third sliding seat; 712, fourth cylinder; 713, first motor; 714, second support frame; 715, rotating shaft; 716, pressure plate; 717, elastic member; 718, third vertical plate; 719, fifth slide rail; 720, rotary connecting seat; 8, I-shape unloading mechanism; 81, fifth worktable; 82, gathering assembly; 821, second fixed seat; 822, second rotary table; 823, receiving block; 824, clamping rod; 825, third motor; 826, sixth cylinder; 83, shifting assembly; 831, connecting slider; 832, second swing rod; 833, follower plate; 834, first lifting rod; 835, placement block; 836, second lifting rod; 837, fourth vertical plate; 838, third mounting plate; 839, fifth cylinder; 8310, second motor; 8311, shaft lever; 8312, connecting rod; 9, U-shape unloading mechanism; 91, pulling assembly; 911, second conveyor belt; 912, pulling block; 93, receiving rack; 94, guiding tube; 95, blocking assembly I; 951, blocking rod; 952, seventh cylinder; 96, collecting assembly; 961, eighth cylinder; 962, fourth sliding seat; 963, movable frame; 964, third support frame; 965, gathering rod; 97, linear guide rail; 98, blocking assembly II; 10, 2D forming mechanism; 101, fourth worktable; 102, second sliding seat; 103, straight line module set IV; 104, second clamping part; 1041, cylinder clamping jaw; 105, bending part; 1051, bending assembly; 10511, wire pressing post; 10512, second connecting block; 10513, upper connecting ring; 10514, annular block; 10515, bending post; 10516, wire slot; 10517, wire routing plate; 10518, wire routing groove; 1052, third power assembly; 10521, sleeve; 10522, bearing II; 10523, second connecting member; 10524, lower gear; 10525, upper gear; 10526, bearing I; 10527, rotating shaft; 10528, first rack; 10529, wire pressing gear; 105210, second rack; 105211, bending gear; 105212, second mounting plate; 105213, lower connecting ring; 105214, support barrel; 1053, first power source; 1054, second power source; 1055, staircase rack; 1056, sliding rack; 1057, third slide rail; 106, linear motor.

### DESCRIPTION OF THE EMBODIMENTS

The technical solutions in the embodiments of the present invention will be clearly and completely described below with reference to the accompanying drawings in the embodiments of the present invention. It is apparent that the described embodiments are only a part, rather than all of the embodiments of the present invention. All other embodiments obtained by those of ordinary skill in the art based on the embodiments of the present invention without creative work are within the protection scope of the present invention as claimed.

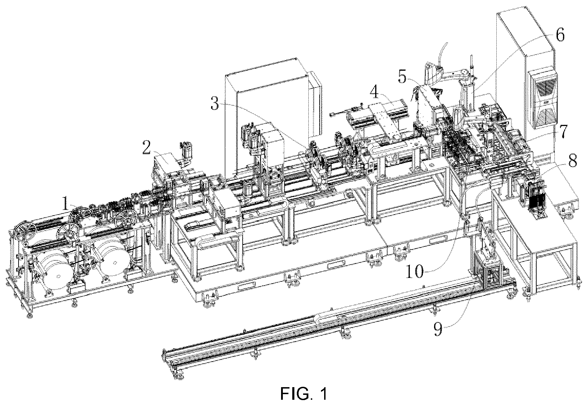

As shown in FIG. 1 to FIG. 57, a device for forming copper wires of a flat wire motor stator includes:
a loading mechanism 1, configured to automatically discharge copper wire rolls and straighten copper wires;
an enamel removal mechanism 2, configured to automatically remove enamel on four side surfaces of the straightened copper wire;
a chamfering mechanism 3, configured to cut away four edges of the enamel-removed copper wire at a same position;
a wire feeding mechanism 4, configured to automatically feed the wires during processing of the loading mechanism 1, the enamel removal mechanism 2 and the chamfering mechanism 3;
a cut-off mechanism 5, configured to cut off the processed copper wire at a fixed length;
a 2D forming mechanism 10, configured to carry out 2D forming on the copper wire that has been cut off at the fixed length;
a transit mechanism 6, configured to transfer the 2D-formed copper wire onto a 3D forming mechanism 7;
the 3D forming mechanism 7, configured to carry out 3D punch forming on the 2D-formed copper wire; and
an unloading part, configured to collect the 3D-formed copper wire.

In this embodiment, the loading mechanism 1 includes a first support frame 12. The plurality of driving parts 13 are disposed in the first support frame 12, and a copper wire reel 14 is placed on each of the driving parts 13. The driving part 13 and the copper wire reel 14 cooperate to form a copper wire discharge structure. The first support frame 12 is provided with a plurality of pressing assemblies 15 corresponding to the copper wire reels 14, a feeding part, and a guide roller set 16 and a straightening assembly 17 that cooperate with the feeding part. The pressing assemblies 15, the guide roller set 16, the feeding part and the straightening assembly 17 cooperate to form a structure that can adjust the tension of the loaded copper wire and stably feed the copper wire.

In this embodiment, the driving part 13 includes a driving roller 18, a driven roller 19, a drive motor 110, a first conveyor belt 111 and a start-stop assembly 113. The driving roller 18 and the driven roller 19 are disposed in parallel. A power output end of the drive motor 110 is connected with the start-stop assembly 113. The start-stop assembly 113 is connected with the driving roller 18 through the first conveyor belt 111. The drive motor 110 operates, and the drive motor 110 drives the start-stop assembly 113 to operate. The start-stop assembly 113 drives the driving roller 18 to rotate through the first conveyor belt 111, and the driving roller 18 drives the copper wire reel 14 to rotate. As the copper wire reel 14 rotates, the driven roller 19 rotates along with the copper wire reel.

In this embodiment, the start-stop assembly 113 includes a driving shaft 130 connected with the drive motor 110, a connecting sleeve 115 in key connection with the driving shaft 130, a linkage shaft 116 in key connection with the connecting sleeve 115, a second cylinder 118 located on one side of the linkage shaft 116, and a limit block 117 connected to an output shaft of the second cylinder 118. An end of the connecting sleeve 115 facing the drive motor 110 is provided with an annular boss. The limit block 117 is connected to a side of the connecting sleeve 115 with the annular boss. The driving shaft 130 is sleeved with a first spring 114 whose one end abuts against the connecting sleeve 115. The connecting sleeve 115 is slidably connected with the driving shaft 130. The linkage shaft 116 is connected with the driving roller 18 through the first conveyor belt 111. The second cylinder 118, the limit block 117 and the connecting sleeve 115 can cooperate to disconnect the linkage shaft 116 from the driving shaft 130. When the drive motor 110 drives the driving roller 18 to rotate through the start-stop assembly 113, the output shaft of the second cylinder 118 in the start-stop assembly 113 pushes the limit block 117 towards the linkage shaft 116, and the first spring 114 pushes the connecting sleeve 115 such that the connecting sleeve 115 connects the driving shaft 130 with the linkage shaft 116. At this time, the drive motor 110 operates, the driving shaft 130 drives the connecting sleeve 115 to rotate, the connecting sleeve 115 drives the linkage shaft 116 to rotate, and the linkage shaft 116 drives the driving roller 18 to rotate through the first conveyor belt 111. When the copper wire reel 14 needs to be replaced, the drive motor 110 may be disconnected from the driving roller 18 through the start-stop assembly 113. The second cylinder 118 pushes the limit block 117 to move, so that the limit block 117 pushes the connecting sleeve 115 away from the linkage shaft 116, and thus, the connecting sleeve 115 is separated from the linkage shaft 116. At this time, the linkage shaft 116 stops rotating, and the driving roller 18 also stops rotating, so that the operator can replace the copper wire reel. After the copper wire reel 14 is replaced with a new one, it is required to carry out threading manually. While the wire is pulled manually, the driving roller 18 and the driven roller 19 rotate along with the copper wire reel 14, thereby achieving the objective of quick threading. The limit block 117 is driven by the output end of the second cylinder 118 to move towards the linkage shaft 116, and the first spring 114 pushes the connecting sleeve 115, thereby completing the connection of the driving shaft 130, the connecting sleeve 115 and the driving shaft 130.

In this embodiment, the driving shaft 130 is a spline shaft, and an inner wall of the connecting sleeve 115 is provided with spline grooves that cooperate with the spline shaft. An end of the linkage shaft 116 corresponding to the connecting sleeve 115 is provided with a spline matched with the spline grooves, and the linkage shaft 116 is connected with the connecting sleeve 115 through the cooperation between the spline and the spline grooves.

In this embodiment, the start-stop assembly 113 further includes a first fixed seat 112. The linkage shaft 116 is rotatably mounted on the first fixed seat 112 through a mounting seat. The second cylinder 118 is fixed to one side of the first fixed seat 112. The drive motor 110 is fixed on the first fixed seat 112.

In this embodiment, the feeding part includes a front feeding assembly 119 and a rear feeding assembly 120. The front feeding assembly 119 and the rear feeding assembly 120 respectively cooperate with the corresponding copper wire reels 14. The front feeding assembly 119 and the rear feeding assembly 120 are identical.

In this embodiment, the front feeding assembly 119 and the rear feeding assembly 120 each include a tensioning cylinder 121, a first slider 122, a first rotary table 124, a stop- block 123, a follower post 125 and a guide wheel 126. The first slider 122 is slidably disposed at a top of the first support frame 12. The first rotary table 124 is rotatably disposed on one side of the first slider 122. The stop- block 123 is mounted on the first slider 122 at the same side as the first rotary table 124. The guide wheel 126 is rotatably connected to the stop block 123. A circumference of the follower post 125 is mounted on the stop block 123 around the first rotary table 124. The tensioning cylinder 121 is mounted on a lower wall of the first support frame 12. An output end of the tensioning cylinder 121 is connected to the first slider 122. The copper wire is led out from the copper wire reel 14 and then wound on the first rotary table 124 through the guide wheel 126. During the conveying process, the follower post 125 disposed on the stop block 123 can prevent the copper wire from sliding out of the wire slot of the first rotary table 124. During the wire feeding process, the output end of the tensioning cylinder 121 abuts against a side wall of the first slider 122, and the tensile force keeps conveyed copper wire always at a certain tension, so that the wire is fed stably.

In this embodiment, the pressing assembly 15 includes a first cylinder 127, a first connecting member 128 and a pressure roller 129. The first connecting member 128 is rotatably mounted on a side wall of the first support frame 12. The pressure roller 129 is rotatably mounted at an end part of the first connecting member 128. The pressure roller 129 abuts against the copper wire reel 14. One end of the first cylinder 127 is hinged on the first support frame 12, and the other end is hinged on the first connecting member 128. When mounting the copper wire reel, an output end of the first cylinder 127 pushes the first connecting member 128 to rotate counterclockwise, the first connecting member 128 lifts the pressure roller 129, and the copper wire reel 14 is mounted in place. Then, the output end of the first cylinder 127 drives the first connecting member 128 to rotate clockwise, so that the pressure roller 129 presses against the copper wire reel 14. Moreover, as the copper wire reel 14 gradually becomes lighter during the discharge process, the pressure roller 129 can stabilize the copper wire reel 14 and prevent the copper wire reel from misalignment, so that the copper wire can be fed stably, thereby ensuring the production quality.

In this embodiment, the straightening assembly 17 includes straightening rollers in both vertical and horizontal directions, thereby better ensuring the copper wire to be conveyed according to the route.

In this embodiment, the guide roller set 16 includes a plurality of horizontal rollers. The horizontal rollers are rotatably connected to the first support frame 12. The guide roller set 16 also functions to guide the copper wire.

When in use, the start-stop assembly 113 disconnects the driving roller 18 from the drive motor 110, the first cylinder 127 lifts the first connecting member 128 and the pressure roller 129, the copper wire reel 14 is mounted to the driving roller 18 and the driven roller 19, and then the copper wire is manually pulled through the corresponding feeding part, the guide roller set 16 and the straightening assembly 17 to perform feeding. When the copper wire reel 14 needs to be replaced, the start-stop assembly 113 disconnects the drive motor 110 from the driving roller 18, the first cylinder 127 lifts the first connecting member 128 and the pressure roller 129, and then the copper wire reel 14 is replaced with a new one. Then, manual threading is carried out, the start-stop assembly 113 connects the driving roller 18 with the drive motor 110, and then feeding is continued.

In this embodiment, the enamel removal mechanism 2 includes a first worktable 21. Enamel removal apparatuses are disposed on the first worktable 21 side by side. Each enamel removal apparatus includes a horizontal cutting apparatus 22, a vertical cutting apparatus 23 and a wire pressing apparatus 24. The horizontal cutting apparatus 22 and the vertical cutting apparatus 23 are slidably connected to the first worktable 21. The horizontal cutting apparatus 22 and the vertical cutting apparatus 23 slide along a same straight line. The horizontal cutting apparatus 22 is arranged horizontally. The vertical cutting apparatus 23 is arranged vertically, which is perpendicular to the horizontal cutting apparatus 22. The wire pressing apparatus 24 is located on one side of the horizontal cutting apparatus 22 or the vertical cutting apparatus 23.

In this embodiment, a moving module I and a moving module II are included. The moving module I and the moving module II each include two straight line module sets 25 mounted on an upper side surface of the first worktable 21, and first sliding seats 26 respectively connected with the straight line module sets 25. The horizontal cutting apparatus 22 and the vertical cutting apparatus 23 are respectively fixedly mounted on the first sliding seats 26 through screws.

In this embodiment, a lower side surface of the first sliding seat 26 is provided with two sliding slots, and the first worktable 21 is provided with two guide rails in slide fit with the sliding slots.

In this embodiment, the horizontal cutting apparatus 22 and the vertical cutting apparatus 23 each include a housing 27, a first power assembly 28, a cam-connecting rod mechanism, a second slider 29 and a wire cutting mechanism. The cam-connecting rod mechanism includes a transmission shaft 210 running through the housing 27. A first cam bearing 211 sleeved on the transmission shaft 210 is disposed in the housing 27. The first cam bearing 211 is hinged with a first connecting rod 212, and the other end of the first connecting rod 212 is hinged with the second slider 29. Two sides of the second slider 29 are provided with second slide rails. An inner wall of the housing 27 is provided with sliding plates located the two sides of the second slider 29. Each sliding plate is provided with a second sliding slot that cooperates with the second slide rail. The second slider 29 is fixedly connected to the wire cutting mechanism through screws. The first power assembly 28 is mounted on the housing 27. The first power assembly 28 includes a servo motor and a speed reducer connected with the servo motor. An output end of the speed reducer runs through the housing 27 and is connected with a gear I. A gear II is sleeved on the transmission shaft 210 in a key connection manner. The gear I meshes with the gear II.

In this embodiment, the wire cutting mechanism includes a push block 213, a fourth cutter 214, a floating assembly 215 and a guide block 216. The push block 213 is connected with the second slider 29. A side surface of the push block 213 facing away from second slider 29 is fixedly provided with the fourth cutter 214 through screws. The floating assembly 215 is provided with cutter holes. The fourth cutter 214 runs through the cutter holes. The guide block 216 is provided with a discharge hole 217. An end of the fourth cutter 214 away from the push block 213 corresponds to the discharge hole 217.

In this embodiment, wire guiding wheels 218 are disposed at the discharge hole 217. A right side surface of the floating assembly 215 is provided with a wire conveying hole 219 flush with the fourth cutter 214. There are four wire guiding wheels 218 that are arranged along the wire conveying hole 219 in pairs.

In this embodiment, a right side surface of the guide block 216 is fixedly connected with a first vertical plate 220 through screws. The first vertical plate 220 is provided with a discharge channel 221 communicating with the discharge hole 217. A left side surface of the first vertical plate 220 is provided with four first elastic assemblies 222 located at corners of the first vertical plate 220. The other end of each of the four elastic assemblies 222 abuts against the push block 213. A right sides surface of the push block 213 is provided with four second elastic assemblies 223 disposed around the fourth cutter 214. The other end of each of the four second elastic assemblies 223 abuts against the floating assembly 215.

In this embodiment, the fourth cutter 214s a first cutter 231 and a second cutter 232 are disposed on and down. The floating assembly 215 includes a first floating block 226 and a second floating block 227. The guide block 216 includes a guide block I 224 and a guide block II 225 integrally formed and connected with the guide block I 224. The second floating block 227 is attached to the guide block II 225. The first floating block 226 is disposed on side edges of the guide block 216 and the second floating block 227. An upper part of the first floating block 226 of the horizontal cutting apparatus 22 abuts against a left side of the second floating block 227. A transverse length of the second floating block 227 is greater than a length of a side surface of the guide block I 224 attached to the first floating block 226. The first floating block 226 and the second floating block 227 of the vertical cutting apparatus 23 are integrally formed and connected. The discharge holes 217 include a first discharge hole 233 and a second discharge hole 234 respectively located on the guide block I 224 and the guide block II 225. The first cutter 231 runs through the first floating block 226 and the second floating block 227 and corresponds to the second discharge hole 234 left and right. The second cutter 232 runs through the first floating block 226 and corresponds to the first discharge hole 233 left and right. A side surface of the first floating block 226 adjacent to the push block 213 in each of the horizontal cutting apparatus 22 and the vertical cutting apparatus 23 is provided with the same number of counterbores as the second elastic assemblies 223. The second elastic assemblies 223 run through the counterbores and elastically abut against the first floating block 226.

In this embodiment, a lower side surface of the housing 27 is provided with a through hole. The discharge channel 221 is fixed with a discharge duct 235 through screws. The discharge duct 235 runs through the through hole and extends to below the housing 27.

In this embodiment, the wire pressing apparatus 24 includes a mounting block 228 fixedly mounted on a side surface of the horizontal cutting apparatus 22. Two sides of the mounting block 228 are respectively provided with a third cylinder 229 and a first wire passing block 230. The first wire passing block 230 corresponds to the wire conveying hole 219 in position. An output end of the third cylinder 229 can abut against the first wire passing block 230 after extending out.

When in use, before the start of the operation, the output end of the third cylinder 229 of the wire pressing apparatus 24 abuts against the first wire passing block 230 so as to press against the copper wire. Under the cooperation of the straight line module sets 25, the copper wire is continuously conveyed to the vertical cutting apparatus 23 until passing through the whole enamel removal apparatus, thereby realizing automatic threading instead of manual threading. After the threading is completed, the horizontal cutting apparatus 22 and the vertical cutting apparatus 23 move to proper positions under the action of the straight line module set 25. During the enamel removal process, the horizontal cutting apparatus and the vertical cutting apparatus do not move. The distance between the horizontal cutting apparatus 22 and the vertical cutting apparatus 23 is adjusted according to production demands. The first power assemblies 28 on the horizontal cutting apparatus 22 and the vertical cutting apparatus 23 drive the transmission shaft 210 to rotate. The transmission shaft 210 drives the first cam bearing 211 to move. The first cam bearing 211 drives the first connecting rod 212 to move. The first connecting rod 212 drives the second slider 29 to make a reciprocating sliding motion under the action of the first cam bearing 211. The second slider 29 drives the fourth cutter 214 on the push block 213 to reciprocate so as to die-cut the copper wire passing through the wire conveying hole 219. During each die-cutting, the push block 213 presses against the second elastic assemblies 223, so that the slider abutting against the second elastic assemblies 223 is closely attached to the guide block 216. Thus, the copper wire is fixed, thereby ensuring the copper wire to be more stable during the die-cutting. At the same time, the fourth cutter 214 pushes the enamel scraps into the discharge hole 217, such that the enamel scraps pass through the discharge channel 221 and enter the discharge duct 235, thereby completing collection. In this way, the enamel on the surface of the copper wire can be removed automatically.

In this embodiment, the chamfering mechanism 3 includes a second worktable 31. Mounting frames are disposed on the second worktable 31. The number of the mounting frames is four. The four mounting frames are disposed in pairs. A second power assembly 33, a driving assembly 34 and edge cutting assemblies 35 are disposed on the mounting frames. The second power assembly 33 is connected with the driving assembly 34. The driving assembly 34 is connected with the edge cutting assemblies 35. The second power assembly 33 provides power for the edge cutting assemblies 35. The driving assembly 34 is configured to drive the edge cutting assemblies 35 to cut away the edges. Each mounting frame includes a first base 321, two second vertical plates 322 and two fixed plates 323. The first base 321 is fixedly connected with the second worktable 31. The two second vertical plates 322 are fixedly connected to the first base 321 in parallel. The two second vertical plates 322 are disposed symmetrically, so that the edge cutting assemblies 35 can stably cut the edges, and the mechanism can operate stably. The two fixed plates 323 are respectively fixedly connected to side surfaces of the two second vertical plates 322 away from each other. The two fixed plates 323 are provided with through holes for the copper wires to pass through. The second power assembly 33 includes a servo motor and a speed reducer. The servo motor is mounted on the speed reducer, and the speed reducer is mounted on the first base 321. The driving assembly 34 includes a rotating shaft, two driving gears 341 and two driven gears 342. The rotating shaft is rotatably connected with the two second vertical plates 322. The two driving gears 341 are fixedly connected to the rotating shaft, and the two driven gears 342 are respectively rotatably connected to opposite side surfaces of the two second vertical plates 322. The two driving gears 341 respectively mesh with the two driven gears 342. A transmission assembly for transmitting the driving assembly 34 is disposed between the second power assembly 33 and the driving assembly 34. The transmission assembly includes a driving pulley, a driven pulley and a belt. The driving pulley is fixedly connected with a power output end of the speed reducer, and the driven pulley is fixedly connected with the rotating shaft. The driving pulley is connected with the driven pulley through the belt.

In this embodiment, each edge cutting assembly 35 includes a third cutter 351, a first connecting block 352 and two first followers 353. The end part of the third cutter 351 is in such a shape that the uneven side edges of the enamel-removed copper wire can be chamfered. The third cutter 351 is fixedly connected with the first connecting block 352, and the two first followers 353 are rotatably connected to two sides of the first connecting block 352. The two driven gears 342 are each provided with an inner ring 3421, and the inner ring 3421 is integrally formed with the driven gear 342. The two driven gears 342 are disposed symmetrically. A sliding slot III 3422 for the first follower 353 to slide therein is formed between the inner ring 3421 and the driven gear 342. When the driven gear 342 rotates, the edge cutting assembly 35 can be driven to move, so that the copper wire can be chamfered. Two opposite paths depressed along a radial direction of the center of circle are provided in the sliding slots III 3422. A fixing assembly for fixing the copper wire is disposed between the two driven gears 342, which facilitates chamfering.

In this embodiment, the fixing assembly includes a second wire passing block 361, a supporting block 362, a third floating block 363 and third elastic assemblies 37. Two ends of the second wire passing block 361 and the supporting block 362 are respectively fixedly connected with the two fixed plates 323. The second wire passing block 361 is located on an upper side surface of the supporting block 362. A lower side surface of the second wire passing block 361 is provided with a float groove for the third floating block 363 to float up and down. The third floating block 363 is located in the float groove. A lower side surface of the third floating block 363 is provided with a wire passing groove for the copper wire to pass through, so that the copper wire can pass through this wire passing groove and can be fixed.

In this embodiment, the number of the edge cutting assemblies 35 is four. The four edge cutting assemblies 35 are distributed in pairs, and each pair of edge cutting assemblies 35 are distributed up and down. Each pair of edge cutting assemblies 35 are symmetrically disposed up and down. The two upper edge cutting assemblies 35 chamfer the two side edges on the lower end surface of the copper wire, and the two lower edge cutting assemblies 35 chamfer the two side edges on the upper end surface of the copper wire. The two edge cutting assemblies 35 disposed diagonally perform the chamfering at the same time, thereby preventing the four edge cutting assemblies from interfering with each other during the chamfering. Two sides of the second wire passing block 361 and the supporting block 362 are respectively provided with through slots for the third cutter 351 to slide therein, so that the third cutter 351 can slide stably in the through slots.

In this embodiment, there are two third elastic assemblies 37. The two third elastic assemblies 37 are respectively located at two ends of the upper side surface of the wire passing block 361. Each third elastic assembly 37 includes a pressure head 371, a pressure post 372 and two second springs 373. The pressure head 371 contacts an inner wall of the inner ring 3421, and the inner wall of the inner ring 3421 is provided with a protruding path along the radial direction of the center of circle. The pressure head 371 is fixedly connected to a top end of the pressure post 372. A bottom end of the pressure post 372 runs through the second wire passing block 361 and slides therein. The bottom end of the pressure post 372 can press against the third floating block 363, and the third floating block 363 presses against copper wire, so that the copper wire is fixed, which facilitates chamfering of the copper wire. The two second springs 373 are respectively located on two sides of the pressure post 372. A top end of each second spring 373 abuts against a lower surface of the pressure head 371, and a bottom end of each second spring 373 is fixedly connected with the second wire passing block 361, so that the pressure head 371 can return to its original position. Thus, the pressure post 372 moves away from the copper wire, and the third floating block 363 no longer presses against the copper wire, so that the conveying of the copper wire can be continued, thereby chamfering the next position of the copper wire.

In this embodiment, a discharge hopper 39 is disposed at a bottom of the supporting block 362. The supporting block 362 is provided with an opening communicating with the discharge hopper 39, so that the die-cut scraps can fall into the discharge hopper 39. The discharge hopper 39 is fixedly connected with the two second vertical plates 322.

When in use, the second power assembly 33 drives the driving gear 341 to rotate, and the driving gear 341 drives the driven gear 342 to rotate. During the rotation of the driven gear 342, as the first follower 353 of each edge cutting assembly 35 slides along the sliding slot III 3422 of the driven gear 342, the first followers 353 of two of the opposite edge cutting assemblies 35 slide to the paths depressed along the radial direction of the center of circle in the sliding slots III 3422, the third cutters 351 slide towards the copper wire, so as to cut away the side edges of the copper wire. At this time, the first followers 353 of the other two opposite edge cutting assemblies 35 slide to the protruding paths along the radial direction of the center of circle in the sliding slots III 3422, and the third cutters 351 slide away from the copper wire, which prevents the previous two edge cutting assemblies 35 from cutting away the edges. The two pairs of edge cutting assemblies 35 cut away the edges alternately, so that the edges of the copper wire can be cut away automatically. During the edge cutting process, the inner wall of the inner ring 3421 presses against the pressure head 371, so that the pressure post 372 pushes the third floating block 363 towards the copper wire. The third floating block 363 presses against the copper wire, so that the copper wire is fixed by the pressure post 372. The annular inner wall of the inner ring 3421 is provided with the protruding path along the radial direction of the center of circle. When the edge cutting is completed, the rotating driven gear 342 makes the pressure head 371 located on the protruding path of the inner ring 3421. Under the action of the second springs 373, the pressure post 372 moves away from the copper wire, and the third floating block 363 no longer presses against the copper wire, so that the conveying of the copper wire can be continued, thereby chamfering the next position of the copper wire. After the copper wire is chamfered, it is cut off by the subsequent process. The formed copper wire can be directly inserted, which is quick and convenient and greatly improves the production quality and production efficiency.

In this embodiment, the wire feeding mechanism 4 includes a third worktable 42. The third worktable 42 is a steel frame structure whose upper side surface is welded with a steel plate. A movable clamping module set is disposed on the third worktable 42. The movable clamping module set includes a first moving module 43 and a second moving module 44 capable of reciprocating along a same straight line. The first moving module 43 and the second moving module 44 are respectively provided with a clamping apparatus 41. The clamping apparatuses 41 are capable of alternately clamping and pulling the copper wires so as to complete conveying.

In this embodiment, the first moving module 43 is mounted on an upper side surface of the third worktable 42 through screws. A side surface of the third worktable 42 is fixedly provided with a first supporting frame 45 located on two sides of the first moving module 43. The first supporting frame 45 includes four steel frame columns. The steel frame columns are arranged on two sides of the first moving module 43 in pairs. A support plate is disposed on each pair of steel frame columns. A mounting direction of the support plate is the same as a moving direction of the first moving module 43. The second moving module 44 is fixedly mounted to an upper side surface of the support plate on one side through screws.

In this embodiment, a left side surface of the first supporting frame 45 is fixedly provided with a first assembling plate 46 through screws. The first assembling plate 46 is fixedly provided with a third wire passing block 47 in a same line as the clamping apparatus 41 through screws. The first assembling plate 46 is provided with a wire passing hole. The wire passing hole corresponds to the third wire passing block 47 in position.

In this embodiment, the first moving module 43 includes a straight line module set I 48 mounted on the upper side surface of the third worktable 42 and a lower carriage connected with the straight line module set I 48. The lower carriage includes a horizontal plate I 414 fixed with a movable end of the straight line module set I 48 and a vertical plate I 415 fixedly mounted perpendicularly above the horizontal plate I 414. The second moving module 44 includes a straight line module set II 49 mounted on an upper side surface of the first supporting frame 45 and an upper carriage connected with the straight line module set II 49. The upper carriage includes a horizontal plate II 416 whose lower side surface on the right end is fixedly connected with a movable end of the straight line module set II 49, and a vertical plate II 417 fixedly connected perpendicularly to a lower side surface of the horizontal plate II 416. The clamping apparatuses 41 are grouped in pairs and each pair of clamping apparatuses are mounted oppositely on the vertical plate I 415 and the vertical plate II 417.

In this embodiment, the third worktable 42 and the upper side surface of the first supporting frame 45 are respectively provided with two guide rails I 410 and two guide rails II 411. The two guide rails I 410 and the two guide rails II 411 are respectively arranged on two ends of a lower side surface of the horizontal plate I 414 and the horizontal plate II 416 each. The lower side surfaces of the horizontal plate I 414 and the horizontal plate II 416 are respectively provided with sliding slots I 412 and sliding slots II 413 that cooperate with the guide rails I 410 and the guide rails II 411. The guide rails I 410 and the guide rails II 411 are respectively in a slide fit with the sliding slots 1412 and the sliding slots II 413, so that the upper carriage and the lower carriage operate more stably.

In this embodiment, each clamping apparatus 41 is a clamping jaw cylinder.

In this embodiment, when clamping jaws of the clamping jaw cylinders on the lower carriage and the upper carriage are closed, the closed clamping jaws can pass through the middle of the opened clamping jaws of the corresponding clamping jaw cylinders.

In this embodiment, there are a plurality of sets of clamping jaw cylinders oppositely disposed on the lower carriage and the upper carriage.

In this embodiment, the clamping jaw of the clamping jaw cylinder is disposed on a side surface of the cylinder. The clamping jaw cylinders are grouped in pairs and fixedly mounted on the lower carriage and the upper carriage through screws in a staircase manner.

When in use, the straight line module set I 48 drives the lower carriage to move from the rightmost end towards the third wire passing block 47. At this time, the clamping jaw of the clamping jaw cylinder on the lower carriage is opened. At this time, the upper carriage is located close to the third wire passing block 47, and the clamping jaw of the clamping jaw cylinder on the upper carriage clamps the copper wire extending from the third wire passing block 47. At the same time, the straight line module set II 49 drives the upper carriage to move rightwards and pass through the opened clamping jaw of the clamping jaw cylinder on the lower carriage. When the clamping jaw cylinder on the lower carriage reaches the position close to a wire receiving block, the clamping jaw clamps the copper wire, and at the same time, the clamping jaw of the clamping jaw cylinder on the upper carriage releases the copper wire and is opened. The upper carriage and the lower carriage alternately repeat the above actions so as to complete the feeding of the copper wire.

In this embodiment, the cut-off mechanism 5 includes a device frame, fifth cutters 55 and a reciprocating cutting apparatus disposed on the device frame and configured to drive the fifth cutters 55 to reciprocate up and down. The device frame includes a second supporting frame 52 and a second base 57 connected with a bottom of the second supporting frame 52. A pressing apparatus 56 moving with the fifth cutter 55 is disposed at a rear of the fifth cutter 55, and a cutter assembly 58 cooperating with the fifth cutter 55 is disposed below the fifth cutter 55.

In this embodiment, a wire routing block 59 fixedly mounted to an upper side surface of the second base 57 through screws is disposed at a rear of the cutter assembly 58. In this embodiment, the reciprocating cutting apparatus includes a power source 51, a first rotating shaft 53, second cam bearings 510, second connecting rods 511 and assembling mechanisms. The power source 51 is a servo motor. The first rotating shaft 53 horizontally runs through a top end of the device frame. The power source 51 is fixedly mounted on a side surface of the device frame through screws. An output end of the power source 51 is provided with a gear I, and a left end of the first rotating shaft 53 is in key connection with a gear II that meshes with the gear I. The second cam bearings 510 are sleeved on the first rotating shaft 53. A lower end of the second cam bearing 510 is hinged with the second connecting rod 511. The other end of the second connecting rod 511 is hinged with the assembling mechanism. The assembling mechanism and the device frame are slidably connected up and down. The fifth cutter 55 and the pressing apparatus 56 are mounted on a lower side surface of the assembling mechanism. There are four sets of the second cam bearings 510, the second connecting rods 511, the assembling mechanisms, fixing and pressing mechanisms and the fifth cutters 55, which are mounted on the first rotating shaft 53 side by side. The upper side surface of the second base 57 is fixedly provided with the four cutter assemblies 58 located below the fifth cutters 55.

In this embodiment, the second cam bearing 510 includes an axis and a shell. A lower end of the shell is provided with an axis pin hole I. An upper end of the second connecting rod 511 is hinged through an axis pin that runs through the axis pin hole I. An axis pin II runs through a lower end of the second connecting rod 511 so as to be hinged with the assembling mechanism. The axis pin I is perpendicular to the axis pin II.

In this embodiment, the assembling mechanism includes an assembling block 54 and a third slider 512 fixedly mounted to a rear side surface of the assembling block 54 through screws. An upper end of the assembling block 54 is hinged with the lower end of the second connecting rod 511 through the axis pin II. The pressing apparatus 56 and the fifth cutter 55 are respectively mounted on a lower side surface of the assembling block 54 in a front-rear direction. A rear side surface of the assembling block 54 is provided with a sliding slot plate 513 fixedly connected with the device frame through screws. The sliding slot plate 513 is provided with four vertical first sliding slots 514. The third slider 512 is slidably connected in the first sliding slot 514. In order to ensure the third slider 512 to be always in the first sliding slot 514 without coming off, the third slider 512 is an I-shaped or T-shaped structure, and the first sliding slot 514 is an I-shaped or T-shaped structure adapted to the third slider 512. In this embodiment, the pressing apparatus 56 includes a first pressing block 515 and disc springs 516 located between the first pressing block 515 and the assembling mechanism. The first pressing block 515 is integrally connected with three disc spring columns protruding upwards. The disc spring 516 is sleeved on the disc spring column. A lower side surface of the assembling block 54 is provided with circular holes fitted with the disc spring columns. The disc spring column is slidably connected in the circular hole.

In this embodiment, the fifth cutter 55 includes a shank 517 fixed to a lower end of the assembling block 54. The shank 517 is square. An X-shaped cutting edge 518 is disposed below the shank 517.

In this embodiment, the cutter assembly 58 includes a C-shaped cutter holder 519. The cutter holder 519 is fixedly mounted on the second base 57. An upper side surface of the cutter holder 519 is provided with an upper cutter groove 520 communicating with a middle of the cutter holder 519. The upper cutter groove 520 is square, which is matched with the shape of the shank 517. A lower side surface of the cutter holder 519 is provided with a lower cutter groove 521 communicating with the middle of the cutter holder 519 and matched with the cutting edge 518. An inner wall of the lower cutter groove 521 is provided with two triangular prisms which protrude relatively. The triangular prisms correspond to the X-shaped cutting edge 518 in position such that they are able to be attached to the cutting edge 518 to make opposite triangular notches in the copper wire. A rear side surface of the cutter holder 519 is provided with a feed port communicating with the middle of the C-shaped cutter holder 519.

In this embodiment, the second base 57 below the lower cutter groove 521 is provided with a collecting port 522. The collecting port 522 is funnel-shaped. A scrap box 523 connected with the second base 57 is disposed below the collecting port 522. The second base 57 is a welded steel frame. A side surface of the second base 57 has an opening formed by the steel frame. The scrap box 523 may be drawn out through the opening.

When in use, the gear I at the output end of the power source 51 drives the gear II that meshes with the gear I to rotate, and the gear II drives the first rotating shaft 53 to rotate. The first rotating shaft 53 drives the axis of the cam to rotate, and the axis drives the shell to move up and down. The shell drives the hinged second connecting rod 511 to move up and down, and the second connecting rod 511 drives the assembling block 54 to move up and down, so that the third slider 512 on the assembling block 54 moves up and down along the first sliding slot 514, thereby ensuring the assembling block 54 to stably move up and down. At this time, the wire feeding mechanism feeds the copper wire into the feed port in the cutter holder 519 through the wire routing block 59. At this time, the first pressing block 515 presses against the copper wire to stabilize the copper wire. Then, the cutting edge 518 contacts the copper wire to cut the copper wire. After the copper wire is cut by the X-shaped cutting edge 518, triangular scrap blocks that are cut off on two sides enter the collecting port 522 through the lower cutter groove 521, and fall into the scrap box 523 after passing through the collecting port 522, thereby completing the recovery of the scraps. When the scraps need to be cleaned, it is only required to draw out the scrap box 523 through the opening on the side surface of the second base 57 before cleaning.

In this embodiment, the 2D forming mechanism 10 includes two second clamping parts 104, configured to clamp and fix the plurality of copper wires;
two bending parts 105, configured to bend the plurality of copper wires into different shapes while continuously moving towards the second clamping parts 104 so as to continuously bend the plurality of copper wires;
a reciprocating adjusting assembly, configured to drive the second clamping parts 104 and the bending parts 105 to make reciprocating sliding for adjustment so as to realize alternate loading of the second clamping parts 104; and
a fourth worktable 101, the reciprocating adjusting assembly being disposed on the fourth worktable 101.

When in use, the reciprocating adjusting assembly drives one set of the second clamping part 104 and the bending part 105 to move to a loading position of the fourth worktable 101. The loading mechanism places the plurality of copper wires respectively on one set of the second clamping part 104 and the bending part 105. The second clamping part 104 clamps the plurality of copper wires so as to fix the copper wires, and then, the bending part 105 bends the plurality of copper wires. During bending, the bending part 105 continuously moves towards the second clamping part 104, so that the plurality of copper wires is bent into U-shaped copper wires or I-shaped copper wires according to needs. During the bending process of this set of the second clamping part 104 and the bending part 105, the reciprocating adjusting assembly drives the other set of the second clamping part 104 and the bending part to move to the loading position on the fourth worktable 101 for loading and bending. During the loading of one set of the second clamping part 104 the bending part 105, the U-shaped copper wires or the I-shaped copper wires bent and formed by the other set may be taken down.

In this embodiment, the reciprocating adjusting assembly includes a second sliding seat 102 fixed on the fourth worktable 101 through bolts, and a linear motor 106 fixed on the fourth worktable 101 through bolts. The linear motor 106 is connected with the second sliding seat 102 through bolts, and the bending part 105 and the second clamping part 104 are both disposed on the second sliding seat 102.

When it is required to push the bending part 105 and the second clamping part 104 to move, the linear motor 106 may drive the second sliding seat 102 to slide, which facilitates the movement of the second clamping part 104 and the bending part 105. In this embodiment, each second clamping part 104 includes a plurality of cylinder clamping jaws 1041. Bottoms of the plurality of cylinder clamping jaws 1041 are fixed with a supporting seat through bolts. A top of the supporting seat is in the form of a staircase along a reciprocating direction of the linear motor 106. The supporting seat is fixed to one side of the second sliding seat 102 through bolts, so that the cylinder clamping jaws 1041 are distributed on one side of the second sliding seat 102 in the form of a staircase along the reciprocating direction of the linear motor 106.

When in use, the copper wires are clamped and fixed by the clamping jaw cylinders, which facilitates the fixation of the copper wires. Moreover, with the clamping jaw cylinders distributed in the form of a staircase, during the 2D forming of the copper wires, different copper wires on the bending parts 105 will not interfere with each other.

In this embodiment, the bending part 105 includes a same number of bending assemblies 1051 as the cylinder clamping jaws 1041 and third power assemblies 1052 for driving the bending assemblies 1051. Tops of the plurality of third power assemblies 1052 are distributed in the form of a staircase, so that each bending assembly 1051 is parallel to the corresponding cylinder clamping jaw 1041 in the left-right direction. The third power assembly 1052 is provided with a sliding rack 1056. The sliding rack 1056 is connected to the second sliding seat 102 through sliders and third slide rails 1057. A first power source 1053 and a second power source 1054 that are connected with the third power assembly 1052 are fixed to the sliding rack 1056 through bolts. A straight line module set IV 103 is fixed to the sliding rack 1056 through bolts. The straight line module set IV 103 is fixed to the second sliding seat 102 through bolts so as to drive the sliding rack 1056 to reciprocate to the second clamping part 104.

When in use, the first power source 1053 and the second power source 1054 drives the bending assemblies 1051 to press and bend the copper wires. During the bending process, the straight line module set IV 103 pushes the third power assemblies 1052 and the bending assemblies 1051 to move towards the clamping jaw cylinders through the sliding rack 1056, so as to bend the copper wires into different shapes. After the bending is completed, the straight line module set IV 103 drives the third power assemblies 1052 and the bending assemblies 1051 to return to their original positions, so as to bend the next copper wire.

In this embodiment, the third power assembly 1052 includes two second mounting plates 105212, a transmission mechanism, and a plurality of sleeves 10521 and rotating shafts 10527 connected with the transmission mechanism. The two second mounting plates 105212 are disposed up and down, and a gap is disposed between the two second mounting plates 105212. The two second mounting plates 105212 are fixed through a plate. The lower second mounting plate 105212 is fixed to the sliding rack 1056 through bolts. The transmission mechanism is disposed between the two second mounting plates 105212, and connected with the first power source 1053 and the second power source 1054.

The sleeve 10521 is connected with a support barrel 105214 through a bearing II 10522. The support barrel 105214 is connected with an outer ring of the bearing II 10522. The outer ring of the bearing II 10522 is connected with the bending assembly 1051. The outer ring of the bearing II 10522 located on a lower end of the support barrel 105214 is connected with a lower connecting ring 105213. The lower connecting ring 105213 is connected to the second mounting plate 105212. The support barrel 105214, the rotating shaft 10527 and the sleeve 10521 are disposed coaxially, and the rotating shaft 10527 is connected with the sleeve 10521 through the bearing I 10526. The sleeve 10521 and the rotating shaft 10527 are both connected to the bending assembly 1051, so as to drive the bending assembly 1051 to bend the copper wire. Axial lengths of the plurality of support barrels 105214, rotating shafts 10527 and sleeves 10521 are distributed in the form of a staircase, so that each bending assembly 1051 is parallel to the corresponding cylinder clamping jaw 1041 in the left-right direction.

When in use, the first power source 1053 drives the rotating shaft 10527 to rotate through the transmission mechanism, and the rotating shaft 10527 drives the bending assembly 1051 to press against the copper wire. Then, the second power source 1054 operates and drives the sleeve 10521 through the transmission mechanism, and the sleeve 10521 drives the bending assembly 1051 to bend the copper wire, so that the copper wire can be bent.

In this embodiment, the transmission mechanism includes a first rack 10528, a second rack 105210, a bending gear 105211, a wire pressing gear 10529 and a plurality of sets of transmission gears. The plurality of sets of transmission gears, the wire pressing gear 10529 and the bending gear 105211 are disposed side by side. The wire pressing gear 10529 and the bending gear 105211 are both connected to the second mounting plate 105212 through bearings. Each set of transmission gears includes an upper gear 10525 and a lower gear 10524 disposed up and down. The upper gear 10525 is connected to the sleeve 10521 through a second connecting member 10523, and the lower gear 10524 is sleeved on the rotating shaft 10527. The first rack 10528 and the second rack 105210 are disposed on two sides of the plurality of sets of transmission gears. The first rack 10528 and the second rack 105210 are slidably connected to the second mounting plate 105212. The first rack 10528 meshes with the wire pressing gear 10529 and the lower gear 10524. The second rack 105210 meshes with the bending gear 105211 and the upper gear 10525. One end of the wire pressing gear 10529 runs through the second mounting plate 105212 and is connected with the first power source 1053. One end of the bending gear 105211 runs through the second mounting plate 105212 and is connected with the second power source 1054.

When in use, during operation, the first power source 1053 drives the wire pressing gear 10529 to rotate, and the wire pressing gear 10529 drives the first rack 10528 to slide linearly so as to drive the lower gear 10524 to rotate, thereby realizing wire pressing. After the wire pressing is completed, the first power source 1053 stops. The second power source 1054 operates and drives the bending gear 105211 to rotate, the bending gear 105211 drives the second rack 105210 to slide linearly, so that the upper gear 10525 rotates, thereby realizing bending.

In this embodiment, a top of the upper second mounting plate 105212 is fixed with a staircase rack 1055 in the form of a staircase through bolts. The support barrel 105214, the rotating shaft 10527 and the sleeve 10521 are disposed in the staircase rack 1055.

In this embodiment, the bending assembly 1051 includes a second connecting block 10512 connected to an upper side surface of the rotating shaft 10527 through bolts, an annular block 10514 connected to an upper side surface of the sleeve 10521 through bolts, and an upper connecting ring 10513. The upper connecting ring 10513 is connected to an outer ring of the bearing II 10522 on the upper side surface of the support barrel 105214. The upper connecting ring 10513 is fixed to the staircase rack 1055. The second connecting block 10512 is located at a center of an inner ring of the annular block 10514, and upper side surfaces of the annular block 10514, the second connecting block 10512 and the upper connecting ring 10513 are flush. An upper side surface of the second connecting block 10512 is threadedly connected with two wire pressing posts 10511 that are not in contact with each other. An upper side surface of the annular block 10514 is threadedly connected with bending posts 10515. Each bending post 10515 is provided with a bent wire slot 10516. The wire pressing post 10511 is located on a side of the bending post 10515 facing the cylinder clamping jaw 1041.

An upper side surface of the upper connecting ring 10513 is fixedly provided with a wire routing plate 10517 through bolts. The wire routing plate 10517 is provided with a wire routing groove 10518. The copper wire runs through the wire routing groove 10518. The wire routing plate 10517 is provided with two arc-shaped sliding slots with the axis of the rotating shaft 10527 as the center of circle. The two arc-shaped sliding slots are located on a same side of the wire routing plate 10517, and the two arc-shaped sliding slots have different diameters. The wire pressing post 10511 and the bending post 10515 are respectively located in the two arc-shaped sliding slots. When in use, the copper wire is placed in the wire routing groove 10518 of the wire routing plate 10517. At this time, the copper wire is located between the two wire pressing posts 10511 and the two bending posts 10515. Then, the rotating shaft 10527 drives the second connecting block 10512 to rotate clockwise, and the wire pressing posts 10511 located on the second connecting block 10512 rotate to contact the copper wire, so as to limit the copper wire. Then, the sleeve 10521 drives the annular block 10514 to rotate counterclockwise, and the annular block 10514 drives the bending posts 10515 to rotate and bend the copper wire, so that the copper wire is bent. After the bending, the sleeve 10521 drives the bending posts 10515 to return their original positions. At this time, the straight line module set IV 103 drives the sliding rack 1056 to move towards the cylinder clamping jaw 1041 so as to perform subsequent bending on the copper wire. During the bending process, when the rotating shaft 10527 drives the second connecting block 10512 to rotate counterclockwise, the sleeve 10521 drives the annular block 10514 to rotate clockwise, so as to bend the U-shaped copper wire and the I-shaped copper wire. Due to the bending assemblies and the clamping jaw cylinders distributed in the shape of a staircase, the copper wires can be bent at the same time without interfering with each other.

In this embodiment, the transit mechanism 6 includes a robotic arm 61. The robotic arm 61 is connected with an adjusting framework. An upper part of the adjusting framework is fixedly provided with a robotic arm connecting plate through screws. A movable end of the robotic arm 61 is connected with a movable end of the robotic arm 61. A transverse moving module is disposed in the adjusting framework. Two longitudinal moving modules are disposed on the transverse moving module. A lower end of each of the longitudinal moving modules is fixedly provided with a first clamping part 611 through screws. The adjusting framework is provided with second sliding slots 62. An upper part of a front side surface of each of the longitudinal moving modules is provided with a second follower 63, and the second follower 63 is slidably connected in the second sliding slot 62.

In this embodiment, there are two transverse moving modules that are disposed oppositely.

In this embodiment, there are four second sliding slots 62 that cooperate with the second followers 63 in position. An inclination angle of the second sliding slots 62 on two sides is greater than an inclination angle of the two second sliding slots 62 in the middle. When the transverse moving modules move, the second followers 63 move along the second sliding slots 62.

In this embodiment, the adjusting framework includes a first mounting plate 64 connected with the robotic arm connecting plate and an adjusting plate 65 disposed in parallel with the first mounting plate 64. Edges of the first mounting plate 64 and the adjusting plate 65 are fixedly connected with three first support plates 66 through screws. The three first support plates 66 are respectively located on a left side edge, a right side edge and a left end of an upper side edge of the first mounting plate 64 and the adjusting plate 65. The first mounting plate 64 is provided with reserved screw holes. The transverse moving module is fixedly mounted to the first mounting plate 64 through screws. The four second sliding slots 62 are provided in the adjusting plate 65.

In this embodiment, the transverse moving module includes an adjusting cylinder 67 located between the first mounting plate 64 and the adjusting plate 65, and second assembling plates 68 fixed with an output end of the adjusting cylinder 67 through screws. A cylinder body of the adjusting cylinder 67 is fixedly connected with the first mounting plate 64 through screws. The longitudinal moving modules are disposed on the second assembling plates 68.

In this embodiment, the adjusting cylinders 67 are double-shaft cylinders. Output ends of the two adjusting cylinders 67 are disposed oppositely, and the two adjusting cylinders 67 are located in a same horizontal line.

In this embodiment, the longitudinal moving module includes fourth slide rails 69 fixedly mounted on the first mounting plate 64 through screws. Two ends of a front side surface of each first mounting plate 64 are respectively provided with one fourth slide rail 69. A slide core 610 is slidably connected in the fourth slide rails 69. The second follower 63 is mounted on an upper part of a front side surface of the slide core 610.

In this embodiment, the second assembling plates 68 are disposed in parallel on a front side surface of the adjusting cylinder 67, and have one end fixed with an output shaft of the adjusting cylinder 67 through screws. The second assembling plates 68 are located at the front side surface of the adjusting cylinder 67 when the output shaft of the adjusting cylinder 67 retracts.

In this embodiment, the first clamping parts 611 are clamping jaw cylinders.

When in use, the clamping jaw cylinders and the adjusting cylinder 67 are connected to a pneumatic system. The pneumatic system controls the output end of the adjusting cylinder 67 to extend, and the output end drives the first mounting plate 64 to move transversely. The first mounting plate 64 drives the slide cores 610 to move transversely while moving along the inclination direction of the second sliding slots 62 under the effect of the second followers 63, so that the clamping jaw cylinders mounted at the lower ends of the slide cores 610 are arranged in parallel in the transverse direction. When the output end of the adjusting cylinder 67 retracts, the first mounting plate 64 moves transversely to drive the slide cores 610 to move transversely while the slide cores 610 move along the inclination direction of the second sliding slots 62 under the effect of the second followers 63 such that the slide cores are arranged at different heights. Under the control of the pneumatic system, the clamping jaw cylinders can clamp products at different heights, and then the robotic arm 61 can be moved to transfer the copper wires from the 2D forming mechanism 10 onto the 3D forming mechanism 7.

In this embodiment, the 3D forming mechanism 7 includes:
a fixed frame 710;
forming molds, configured to form the copper wires;
a transfer assembly, configured to transfer the copper wires into the forming molds and transfer the formed copper wires out of the forming molds; and a linkage assembly 73, configured to drive the forming molds and the transfer assembly to operate.

The forming molds include a plurality of third sliding seats 711 arranged linearly, lower molds 76 slidably disposed on the third sliding seats 711 and upper molds 79 mounted above the lower molds 76. The transfer assembly includes a transfer plate 78. A third base 75 is disposed below the fixed frame 710. Left and right sides of the fixed frame 710 are respectively fixedly provided with a second support frame 714 through bolts. The second support frame 714 is fixed on the third base 75 through bolts. A movable plate 71 is fixed to bottoms of the third sliding seat 711 through bolts. The movable plate 71 is connected with slide posts 72 through linear bearings. Two ends of the slide post 72 are respectively fixed to the fixed frame 710 and the third base 75 through bolts. The slide posts 72 are disposed vertically. A plurality of third vertical plates 718 fixed to the third base 75 through bolts are disposed below the movable plate 71. When the movable plate 71 moves to the lowest position, the movable plate 71 does not contact the third vertical plates 718. The third vertical plates 718 are provided with through holes. The transfer plate 78 is mounted on a same side of the plurality of third sliding seats 711 and the transfer plate 78 can make a reciprocating sliding motion along an arrangement direction of the plurality of third sliding seats 711. Two sides of the transfer plate 78 are symmetrically provided with side plates 77, and one of the side plates 77 is located between the transfer plate 78 and the third sliding seats 711. The side plates 77 slide along the vertical direction. The side plates 77 can move upwards to drive the copper wire away from the transfer plate 78. The side plates 77 and the transfer plate 78 are all provided with wire slots for placing the copper wires.

The third sliding seat 711 is fixed with a fourth cylinder 712 through bolts. An output shaft of the fourth cylinder 712 is connected to the lower mold 76 through a floating coupling. The lower mold 76 is slidably connected onto the third sliding seat 711 through a fifth slide rail 719 and a sliding slot IV 7311, and the fourth cylinder 712 can push the lower mold 76 to move towards the transfer plate 78, so as to push the lower mold 76 to be located below the upper mold 79. When the side plates 77 move upwards to drive the copper wire away from the transfer plate 78, the transfer plate 78 slides to its original position. When the side plates 77 move downwards such that the copper wire is located on the transfer plate 78, the transfer plate 78 transfers another copper wire to above the lower mold 76. The linkage assembly 73 can push the movable plate 71 up and down, so as to drive the lower mold 76 to cooperate with the upper mold 79 to form the copper wire. The linkage assembly 73 is connected with the side plates 77 and the transfer plate 78, so as to drive the side plates 77 to move up and down and drive the transfer plate 78 to make a reciprocating sliding motion along the arrangement direction of the plurality of third sliding seats 711. When in use, different types of molds may be mounted on the plurality of third sliding seats 711 according to production needs. When a certain mold is needed, the fourth cylinder 712 pushes the lower mold 76 on the third sliding seat 711 to below the corresponding upper mold 79, and then the linkage assembly 73 operates. The linkage assembly 73 pushes the lower mold 76 close to the upper mold 79. At the same time, the linkage assembly 73 pushes the side plates 77 to lift the copper wire such that the copper wire does not contact the transfer plate 78, and drives the transfer plate 78 to move to the left as shown in the figure. After the upper mold 79 and the lower mold 76 are pressed against each other to form the copper wire, the linkage assembly 73 drives the movable plate 71 to move downwards. At this time, the side plates 77 are still at the highest position, so that the copper wire falls back into the wire slots of the side plate 77. Then, the linkage assembly 73 drives the side plates 77 to slowly move downwards. While the side plates 77 slowly move downwards, the transfer plate 78 stops sliding until the side plates 77 are lower than the transfer plate 78. The copper wire falls into the wire slots of the transfer plate 78. Then, under the action of the linkage assembly 73, the transfer plate 78 moves to the right as shown in the figure, thereby realizing one copper wire forming and transferring process. A second rotating shaft 715 continues rotating, and the linkage assembly 73 continues operating. The above process is continuously repeated.

In this embodiment, the linkage assembly 73 includes the second rotating shaft 715, a first motor 713 configured to drive the second rotating shaft 715 to rotate, and a first cam 733, a second cam 734 and a cylindrical cam 731 that are disposed on the second rotating shaft 715. One side of the second support frame 714 is provided with a rotary connecting seat 720. One end of the second rotating shaft 715 runs through the second support frame 714, and is connected to the rotary connecting seat 720 through a bearing. The second rotating shaft 715 runs through the plurality of third vertical plates 718 through bearings. An arc-shaped side surface of the first cam 733 is provided with one end of a first swing rod 736. The first swing rod 736 is rotatably connected with a contact wheel in contact with the arc-shaped side surface. The first swing rod 736 is rotatably connected to the third vertical plate 718. A lower side surface of the movable plate 71 is fixed with a lifting block 74 through bolts. The lifting block 74 is provided with a groove, and an end of the first swing rod 736 away from the first cam 733 is connected with a follower located in the groove, so that the first swing rod 736 can push the lifting block 74 up and down when rotating.

An arc-shaped side surface of the second cam 734 is provided with a connecting plate 735. The connecting plate 735 is fixed on the two side plates 77 through bolts, and the connecting plate 735 is provided with a contact wheel in contact with the arc-shaped side surface of the second cam 734 so as to push the side plates 77 to move upwards. The first cam 733 and the second cam 734 protrude in opposite directions, so that the side plates 77 and the movable plate 71 can move up and down synchronously. An arc length of the protruding part of the first cam 733 is smaller than an arc length of the protruding part of the second cam 734, and ends of the arc-shaped surfaces of the first cam 733 and second cam 734 facing the rotation direction contact the first swing rod 736 and the connecting plate 735 at the same time when the second rotating shaft 715 rotates.

A side surface of the cylindrical cam 731 is provided with the sliding slot IV 7311, and a pull block 732 located on the transfer plate 78 is disposed in the sliding slot IV 7311. When the cylindrical cam 731 rotates, the pull block 732 slides along the sliding slot IV 7311 so as to drive the transfer plate 78 to make a reciprocating sliding motion. The sliding slot IV 7311 includes a straight line section and an oblique line section. The straight line section communicates with the oblique line section, and a joint thereof is provided with a chamfer. One end of the pull block 732 is located in the straight line section or the oblique line section.

There may be a plurality of cylindrical cams 731, first cams 733, second cams 734, first swing rods 736, connecting plates 735, pull blocks 732 and third vertical plates 718 according to actual situations.

When in use, the first motor 713 operates. The first motor 713 drives the first cam 733, the second cam 734 and the cylindrical cam 731 to rotate through the second rotating shaft 715. The rotation of the first cam 733 drives one end of the first swing rod 736 to move downwards, and the other end of the first swing rod 736 pushes the lifting block 74 to move upwards. The lifting block 74 drives the lower mold 76 close to the upper mold 79 through the movable plate 71 and the third sliding seat 711. At the same time, the rotation of the second cam 734 lifts the connecting block up, and the side plates 77 lift the copper wire such that the copper wire does not contact the transfer plate 78. The pull block 732 slides along the oblique line section of the sliding slot IV 7311, so that the pull block 732 drives the transfer plate 78 to move to the left as shown in the figure. After the upper mold 79 and the lower mold 76 are pressed against each other to form the copper wire, the first cam 733 continues rotating, so that the lower mold 76 gradually moves downwards. Since the arc length of the protruding part of the first cam 733 is smaller than the arc length of the protruding part of the second cam 734, and the ends of the arc-shaped surfaces of the first cam 733 and second cam 734 facing the rotation direction contact the first swing rod 736 and the connecting plate 735 at the same time when the second rotating shaft 715 rotates, the highest position of the second cam 734 is still in contact with the connecting plate 735. At this time, the side plates 77 still do not move down, and the copper wire falls back into the wire slots of the side plates 77. Then, the second cam 734 continues rotating, and the connecting block slowly moves down along with the second cam 734. When the pull block 732 moves to one end of the cylindrical cam 731, the pull block 732 is able to stay for a short time due to the straight line section of the sliding slot IV 7311. When the cooperation of the rotating second cam 734 and the connecting plate 735 makes the side plates 77 lower than the transfer plate 78, the copper wire falls back into the wire slot of the transfer plate 78. Then, the pull block 732 passes through the straight line section of the sliding slot IV 7311 and enters the oblique line section. The pull block 732 drives the transfer plate 78 to move to the right as shown in the figure, thereby realizing one copper wire forming and transferring process. The second rotating shaft 715 continues rotating, and the first cam 733 rotates to lift the movable plate 71 through the first swing rod 736. The above process is continuously repeated.

In this embodiment, an upper side surface of the third vertical plate 718 is fixed with a fifth slide rail 719 through bolts, and the transfer plate 78 is slidably connected to the fifth slide rail 719. Front and rear sides of the fifth slide rail 719 are fixed with vertically disposed sliding plates through bolts. The side plates 77 are connected to the sliding plates through the sliding slot IV 7311.

When in use, the fifth slide rail 719 cooperates with the transfer plate 78 so that the transfer plate 78 can make a reciprocating sliding motion, and the sliding slot IV 7311 cooperates with the sliding plates so that the side plates 77 can slide up and down, thereby ensuring use.

In this embodiment, a plurality of elastic members 717 are vertically fixed on the fixed frame 710. The elastic members 717 are specifically elastic telescopic rods. Bottoms of the elastic members 717 are connected with a pressure plate 716 through bolts. The pressure plate 716 contacts the copper wire. A plurality of upright posts abutting against a lower side surface of the pressure plate 716 are connected to the movable plate 71 through bolts. When the transfer plate 78 transfers the copper wire, the copper wire does not contact the upright posts.

When in use, tops of the upright posts abut against a bottom of the pressure plate 716. While the movable plate 71 moves upwards, the upright posts push the pressure plate 716 to move upwards, and the side plates 77 also move upwards, so that the pressure plate 716 is always in contact with the copper wire, thereby preventing the copper wire from misalignment. When the movable plate 71 moves down, the elastic members 717 push the pressure plate 716 to continue contacting the upright posts, thereby ensuring the limit to the copper wire.

In this embodiment, a lower part or lower parts of one or more upper molds 79 is/are slidably connected with a second pressing block 791 corresponding to the copper wire up and down in position, the second pressing block 791 is provided with a third spring 792 located in the upper mold 79, the third spring 792 is vertically disposed so as to push the second pressing block 791 to move downward, and upper and lower ends of the third spring 792 are respectively in contact with the fixed frame 710 and the second pressing block 791.

When in use, the upper mold 79 provided with the second pressing block 791 and the lower mold 76 matched with the upper mold 79 form an I-shaped copper wire mold. When the lower mold 76 moves upwards, the second pressing block 791 can temporary limit the lower mold so as to ensure the formation.

In this embodiment, the unloading part includes a U-shape unloading mechanism 9 and an I-shape unloading mechanism 8. The U-shape unloading mechanism 9 is located on one side of the transfer plate 78, the I-shape unloading mechanism 8 is located at one end of the transfer plate 78, and the I-shaped copper wire on the transfer plate 78 gradually moves to the I-shape unloading mechanism 8, so as to realize unloading of the U-shaped copper wire and the I-shaped copper wire.

In this embodiment, the U-shape unloading mechanism 9 includes a pulling assembly 91 located on one side of the 3D forming mechanism, a receiving rack 93 located below the pulling assembly 91, a guiding tube 94 connected to an end of the receiving rack 93 away from the 3D forming mechanism, and a collecting assembly 96 located below an end of the guiding tube 94 away from the receiving rack 93.

The pulling assembly 91 includes a second conveyor belt 911 and one or more pulling blocks 912 located on the second conveyor belt 911. The pulling block 912 moves as the second conveyor belt 911 operates so as to pull the copper wire onto the receiving rack 93.

The receiving rack 93 and the guiding tube 94 are both inclined such that the copper wire slides from the receiving rack 93 and the guiding tube 94 onto the collecting assembly 96.

The collecting assembly 96 includes a linear guide rail 97, a fourth sliding seat 962 disposed on the linear guide rail 97, an eighth cylinder 961 fixed on the fourth sliding seat 962 through bolts, a movable frame 963 disposed on the fourth sliding seat 962 through a linear bearing, two third support rods fixed on the movable frame 963 through bolts, and a gathering rod 965 fixed on the two third support rods through bolts. The gathering rod 965 is located below an end of the guiding tube 94 away from the receiving rack 93. Two third support frames 964 have different lengths, and the longer third support frame 964 is disposed at a side close to the guiding tube 94, so that the gathering rod 965 is inclined downwards from the end close to the guiding tube 94. Lower ends of the gathering rod 965 and the guiding tube 94 are respectively provided with a blocking assembly II 98 and a blocking assembly I 95. The blocking assembly II 98 and the blocking assembly I 95 have a same structure. The blocking assembly I 95 includes a blocking rod 951 and a seventh cylinder 952. The gathering rod 965 and the guiding tube 94 are respectively provided with through holes for the blocking rod 951 to vertically pass through. The seventh cylinder 952 is connected to the blocking rod 951 through a floating coupling so as to push the blocking rod 951 to extend upwards out of the gathering rod 965 or the guiding tube 94.

When in use, the second conveyor belt 911 drives the pulling block 912 to move, and when moving, the pulling block 912 pulls the U-shaped copper wire on the transfer plate 78 onto the receiving rack 93, and the U-shaped copper wire on the receiving rack 93 slides onto the guiding tube 94 and is blocked by the blocking rod 951. When a certain number of the U-shaped copper wires are collected, the seventh cylinder 952 on the guiding tube 94 drives the blocking rod 951 to move downward, so that the U-shaped copper wires slide onto the gathering rod 965. At this time, the blocking rod 951 on the gathering rod 965 starts to block the U-shaped copper wire again. After the blocking rod 951 on the gathering rod 965 receives all the copper wires on the guiding tube 94, the linear guide rail 97 drives the U-shaped copper wires to move to the next production station through the sliding seat, the movable frame 963, the support rod and the gathering rod 965. After the transfer is completed, the linear guide rail 97 drives the gathering rod 965 to return its original position. Then, the above copper wire collection process may be repeated.

When in use, in order to ensure the gathering rod 965 to receive the copper wires, the eighth cylinder 961 may drive the movable frame 963 to move up and down, so that the gathering rod 965 can move up and down, thereby ensuring that the gathering rod 965 can receive the copper wires normally.

In this embodiment, the I-shape unloading mechanism 8 includes a fifth worktable 81, a shifting assembly 83 located on one side of the 3D forming mechanism, and a gathering assembly 82 disposed on a side of the shifting assembly 83 facing away from the 3D forming mechanism. The shifting assembly 83 includes a third mounting plate 838 fixed on the fifth worktable 81 through bolts, a second motor 8310 fixed on the third mounting plate 838 through bolts, two fourth vertical plates 837 disposed on two sides of the second motor 8310, second swing rods 832 connected to the fourth vertical plates 837 through bearings and driving connecting rods 8312, follower plates 833 each connected with one end of the swing rod, a first lifting rod 834 and a second lifting rod 836 respectively connected with the two follower plates 833, and a placement block 835 adjustable up and down. The fourth vertical plates 837 are fixed on the third mounting plate 838 through bolts. One side of the second motor 8310 is provided with a shaft lever 8311 rotatably connected to the fourth vertical plates 837. The shaft lever 8311 is connected with an output shaft of the second motor 8310 and the driving connecting rod 8312 through a timing belt. A fifth cylinder 839 located on the fifth worktable 81 is connected to a bottom of the placement block 835 through bolts.

The two second swing rods 832 are disposed symmetrically.

Opposite side surfaces of the fourth vertical plates 837 are fixed with horizontally disposed sixth slide rails through bolts. The sixth slide rails are slidably connected with connecting sliders 831, and the two connecting sliders 831 are vertically and slidably connected to the first lifting rod 834 and the second lifting rod 836.

The gathering assembly 82 includes a second fixed seat 821 fixed on the fifth worktable 81 through bolts, a second rotary table 822 rotatably connected on the second fixed seat 821, a third motor 825 connected with a center of a bottom of the second rotary table 822, and two sets of clamping rods 824 fixed on the second rotary table 822 through bolts. Each set of clamping rods 824 includes a left pair and a right pair, a gap for placing the I-shaped copper wire is left between each pair of clamping rods, and a receiving block 823 is disposed between the two pairs of clamping rods 824. Side surfaces of the receiving block 823 are provided with U-shaped grooves, and the U-shaped grooves of the receiving block 823 are slidably connected to the clamping rods 824, so that the receiving block 823 is vertically slidable along the clamping rods 824. The receiving block 823 abuts against a sixth cylinder 826, and when the second rotary table 822 rotates, an upper end of the sixth cylinder 826 is located below the second rotary table 822.

The third motor 825 is fixed on the second fixed seat 821 through bolts.

When the I-shaped copper wire on the first lifting rod 834 and the second lifting rod 836 comes between the two clamping rods 824, the first lifting rod 834 and the second lifting rod 836 do not contact the I-shaped copper wire that has been placed between the two clamping rods 824 when moving downwards.

When in use, the second swing rods 832 rotate, so that the connecting sliders 831 move away from the gathering assembly 82. The I-shaped copper wire at upper ends of the first lifting rod 834 and the second lifting rod 836 falls into the gap between one set of clamping rods 824, and another I-shaped copper wire is placed on the placement block 835. When the connecting sliders 831 slide to the ends of the slide rails, the end of the first lifting rod 834 is located below the copper wire at the placement block 835, and rear ends of the first lifting rod 834 and the second lifting rod 836 receive the I-shaped copper wire conveyed by the shifting plate. The second swing rods 832 continue rotating, so that another copper wire is transferred into the gathering assembly 82.

When receiving the copper wire for the first time, the sixth cylinder 826 lifts the receiving block 823 to the upper ends of the clamping rods 824, so that the I-shaped copper wire falls to the receiving block 823. As more and more copper wires are received, the sixth cylinder 826 slowly retracts, and the receiving block 823 slowly moves down. When one set of clamping rods 824 is unable to continue collecting the I-shaped copper wires, the third motor 825 drives the second rotary table 822 to rotate, so that the set of clamping rods 824 without the I-shaped copper wires continues collecting the copper wires. When the copper wires in the clamping rods 824 need to be transferred, the sixth cylinder 826 lifts up the receiving block 823, so that the copper wires are pushed out of the clamping rods 824.

When the second rotary table 822 needs to rotate, the fifth cylinder 839 in the shifting assembly 83 pulls the placement block 835 down, so that the connecting sliders 831 slide away from the gathering assembly 82, which ensures the collected copper wires to rotate smoothly.

Although the present invention has been described in detail with reference to the foregoing embodiments, those skilled in the art can still modify the technical solutions recorded in the above embodiments, or make equivalent replacements on part of technical features. Any modification, equivalent replacement, or improvement made within the spirit and principle of the present invention shall fall into the protection scope of the present invention as claimed.

## Claims

1. A device for forming copper wires of a flat wire motor stator, **characterized by** comprising:
a loading mechanism (1), configured to automatically discharge copper wire rolls and straighten copper wires;
an enamel removal mechanism (2), configured to automatically remove enamel on four side surfaces of the straightened copper wire;
a chamfering mechanism (3), configured to cut away four edges of the enamel-removed copper wire at a same position;
a wire feeding mechanism (4), configured to automatically feed the wires during processing of the loading mechanism, the enamel removal mechanism and the chamfering mechanism;
a cut-off mechanism (5), configured to cut off the processed copper wire at a fixed length;
a 2D forming mechanism (10), configured to carry out 2D forming on the copper wire that has been cut off at the fixed length;
a transit mechanism (6), configured to transfer the 2D-formed copper wire onto a 3D forming mechanism (7);
the 3D forming mechanism, being configured to carry out 3D punch forming on the 2D-formed copper wire; and
an unloading part, being configured to collect the 3D-formed copper wire.

2. The device for forming copper wires of a flat wire motor stator according to claim 1, **characterized in that** the loading mechanism (1) comprises a first support frame (12); a plurality of driving parts (13) are disposed in the first support frame, and a copper wire reel (14) is placed on each of the driving parts; and the first support frame is provided with a plurality of pressing assemblies (15) corresponding to the copper wire reels, a feeding part, and a guide roller set and a straightening assembly that cooperate with the feeding part.

3. The device for forming copper wires of a flat wire motor stator according to claim 1, **characterized in that** the enamel removal mechanism (2) comprises a first worktable (21), at least one enamel removal apparatus being disposed on the first worktable, the enamel removal apparatus comprising a horizontal cutting apparatus (22), a vertical cutting apparatus (23) and a wire pressing apparatus (24), the horizontal cutting apparatus and the vertical cutting apparatus being slidably connected to the first worktable (21), the horizontal cutting apparatus and the vertical cutting apparatus sliding along a same straight line, operating tracks of the horizontal cutting apparatus and the vertical cutting apparatus being perpendicular to each other, and the wire pressing apparatus being located on one side of the horizontal cutting apparatus or the vertical cutting apparatus; and
the chamfering mechanism comprises a second worktable (31), mounting frames are disposed on the second worktable, a second power assembly (33), a driving assembly (34) and edge cutting assemblies (35( being disposed on the mounting frames, the second power assembly being connected with the driving assembly (34), the driving assembly being connected with the edge cutting assemblies, the second power assembly providing power for the edge cutting assemblies, and the driving assembly being configured to drive the edge cutting assemblies to cut away the four edges of the copper wire at the same position.

4. The device for forming copper wires of a flat wire motor stator according to claim 1, **characterized in that** the wire feeding mechanism (4) comprises a third worktable (42), a movable clamping module set being disposed on the third worktable, the movable clamping module set comprising a first moving module (43) and a second moving module (44) capable of reciprocating along a same straight line, the first moving module and the second moving module being respectively provided with a clamping apparatus (41), and the clamping apparatuses being capable of alternately clamping and pulling the copper wires so as to complete conveying; and
the cut-off mechanism (5) comprises a device frame, fifth cutters (55) and a reciprocating cutting apparatus disposed on the device frame and configured to drive the fifth cutters (55) to reciprocate up and down, a pressing apparatus (56) moving with the fifth cutter being disposed at a rear of the fifth cutter, and a cutter assembly (58) cooperating with the fifth cutter being disposed below the fifth cutter.

5. The device for forming copper wires of a flat wire motor stator according to claim 1, **characterized in that** the 2D forming mechanism (10) comprises two second clamping parts (104), configured to clamp and fix the plurality of copper wires;
two bending parts, configured to bend the plurality of copper wires into different shapes while continuously moving towards the second clamping parts so as to continuously bend the plurality of copper wires; and
a reciprocating adjusting assembly, configured to drive the second clamping parts and the bending parts to make reciprocating sliding for adjustment so as to realize alternate loading of the second clamping parts.

6. The device for forming copper wires of a flat wire motor stator according to claim 1, **characterized in that** the transit mechanism (6) comprises a robotic arm (61), the robotic arm being connected with an adjusting framework, a transverse moving module being disposed in the adjusting framework, a plurality of longitudinal moving modules being disposed on the transverse moving module, a lower end of each of the longitudinal moving modules being provided with a first clamping part, the adjusting framework being provided with second sliding slots (62), each of the longitudinal moving modules being provided with a second follower (63), and the second follower being slidably connected in the second sliding slot.

7. The device for forming copper wires of a flat wire motor stator according to claim 1, **characterized in that** the 3D forming mechanism (7) comprises forming molds, configured to form the copper wires;
a transfer assembly, configured to transfer the copper wires into the forming molds and synchronously transfer the formed copper wires out of the forming molds; and
a linkage assembly (73), configured to synchronously drive the forming molds and the transfer assembly to reciprocate.

8. The device for forming copper wires of a flat wire motor stator according to claim 1, **characterized in that** the unloading part comprises a U-shape unloading mechanism (9) and an I-shape unloading mechanism (8), the U-shape unloading mechanism and the I-shape unloading mechanism being located on one side of the 3D forming mechanism (7) so as to realize unloading of a U-shaped copper wire and an I-shaped copper wire.

9. The device for forming copper wires of a flat wire motor stator according to claim 8, **characterized in that** the U-shape unloading mechanism (9) comprises a pulling assembly located (91) on one side of the 3D forming mechanism, a receiving rack (93) located below the pulling assembly, a guiding tube (94) connected to an end of the receiving rack away from the 3D forming mechanism, and a collecting assembly (96) located below an end of the guiding tube away from the receiving rack;
the pulling assembly comprises a second conveyor belt (911) and one or more pulling blocks (912) located on the second conveyor belt, the pulling block moving as the second conveyor belt operates so as to pull the copper wire onto the receiving rack;
the receiving rack and the guiding tube are both inclined such that the copper wire slides from the receiving rack and the guiding tube onto the collecting assembly; and the collecting assembly comprises a gathering rod (965) adjustable vertically and horizontally, the gathering rod being located below the end of the guiding tube away from the receiving rack, the gathering rod being inclined downwards from an end close to the guiding tube, lower ends of the gathering rod and the guiding tube being respectively provided with a blocking assembly II (98) and a blocking assembly I (95), and the blocking assembly II and the blocking assembly I having a same structure.

10. The device for forming copper wires of a flat wire motor stator according to claim 8, **characterized in that** the I-shape unloading mechanism (8) comprises a shifting assembly (83) located on one side of the 3D forming mechanism (7) and a gathering assembly (82) disposed on a side of the shifting assembly facing away from the 3D forming mechanism, the shifting assembly comprises a second motor (8310), two fourth vertical plates disposed on two sides of the second motor, second swing rods rotatably connected to the fourth vertical plates, follower plates disposed on the swing rods (832), a first lifting rod (834) and a second lifting rod (836) disposed on the two follower plates, and a placement block (835) adjustable up and down; wherein
the two second swing rods are disposed symmetrically, and the second motor is capable of driving the two second swing rods to rotate;
opposite side surfaces of the fourth vertical plates are provided with connecting sliders (831) that slide left and right, and the two connecting sliders are vertically and slidably connected to the first lifting rod and the second lifting rod; and
the gathering assembly (82) comprises a rotary table, a third motor configured to drive the rotary table to rotate, and two sets of clamping rods (824) located on the rotary table, each set of clamping rods comprising a left pair and a right pair, a gap for placing the I-shaped copper wire being left between each pair of clamping rods, a receiving block (823) being disposed between the two pairs of clamping rods, the receiving block being vertically slidable along the clamping rods, the receiving block abutting against a sixth cylinder (826), and when the rotary table rotates, an upper end of the sixth cylinder being located below the rotary table;
wherein when the I-shaped copper wire on the first lifting rod (834) and the second lifting rod (836) comes between the two clamping rods, the first lifting rod and the second lifting rod do not contact the I-shaped copper wire that has been placed between the two clamping rods when moving downwards.
